(19) Europäisches Patentamt
European Patent Office
Office européen des brevets

(11) EP 4 495 836 A1

(12) # EUROPEAN PATENT APPLICATION

(43) Date of publication:
**22.01.2025 Bulletin 2025/04**

(21) Application number: **24159780.6**

(22) Date of filing: **26.02.2024**

(51) International Patent Classification (IPC):
***G06N 5/01*** *(2023.01)*

(52) Cooperative Patent Classification (CPC):
**G06N 5/01**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.07.2023 JP 2023116889**

(71) Applicant: **Kabushiki Kaisha Toshiba**
**Tokyo 105-0023 (JP)**

(72) Inventors:
- **HIDAKA, Ryo**
  **Tokyo (JP)**
- **TATSUMURA, Kosuke**
  **Tokyo (JP)**
- **YAMASAKI, Masaya**
  **Tokyo (JP)**
- **NAKAYAMA, Jun**
  **Tokyo (JP)**

(74) Representative: **Marks & Clerk LLP**
**15 Fetter Lane**
**London EC4A 1BW (GB)**

(54) **INFORMATION PROCESSING DEVICE, INFORMATION PROCESSING METHOD, COMPUTER PROGRAM, AND CIRCUIT INFORMATION**

(57) An information processing device according to an embodiment includes a solver device (40) and an information processing circuit (301). The solver device (40) stores first weight values and second weight values. The solver device (40) solves a combination optimization problem minimizing a cost function including weight values obtained by combining the first weight values and the second weight values. The information processing circuit (301) repeatedly acquires first data. The information processing circuit (301) repeatedly acquires second data asynchronously with the timing of acquiring the first data. The information processing circuit (301) updates the first weight values stored in the solver device (40) on the basis of the first data, and updates a plurality of second weight values stored in the solver device (40) on the basis of the second data.

FIG.7

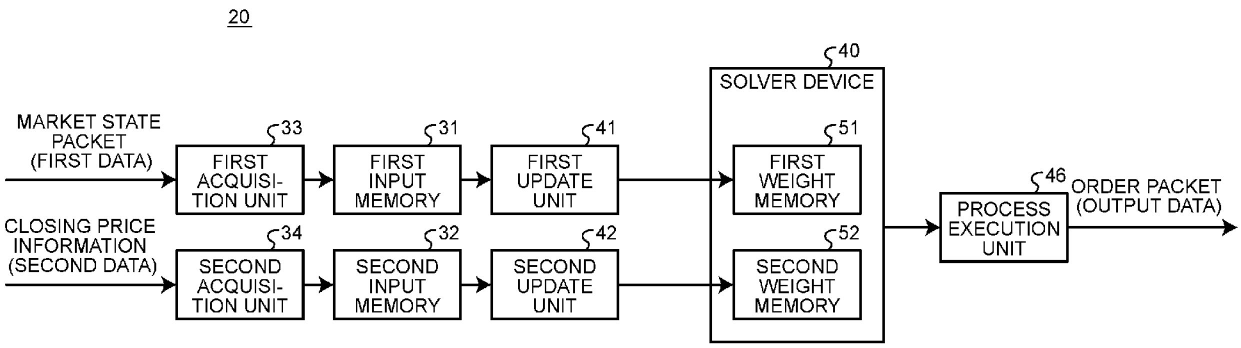


EP 4 495 836 A1

## Description

FIELD

Embodiments described herein relate generally to an information processing device, an information processing method, a computer program, and circuit information.

BACKGROUND

Optimization of systems in various fields of application, such as control, finance, communication, logistics, and chemistry, is often mathematically reduced to combination optimization problems. An information processing system that implements various information processing functions such as recognition, determination, and planning by solving a combination optimization problem and enhances efficiency of such functions has been proposed.

The combination optimization problem is to define a cost function using a plurality of decision variables (for example, discrete variables) representing a state of a system to be optimized as arguments and solve a combination of values of a plurality of decision variables that minimizes the defined cost function. The state of the system expressed by the plurality of decision variables is referred to as a solution. In the combination optimization problem, as the number of decision variables increases, the number of states that can be taken as a solution increases exponentially. An increase in the number of states that can be taken as a solution is referred to as a combination explosion. The combinational optimization of selecting one optimum solution from all solution candidates is known as a problem that is difficult to calculate. Performing large-scale combinatorial optimization in a short time is still a challenge.

In recent years, a specific purpose device called an Ising machine that searches a ground state of an Ising spin model has attracted attention. A problem of searching the ground state of the Ising spin model is called an Ising problem. The Ising problem is a combination optimization problem that minimizes a cost function given by a quadratic function of an Ising spin that is one of binary variables. In the Ising problem, the cost function is referred to as Ising energy. Many practical combination optimization problems can be converted into Ising problems. The Ising machine can solve the Ising problem at high speed. Therefore, many practical combination optimization problems can be solved at high speed using an Ising machine.

In a case where the situation changes from moment to moment, a new combination optimization problem may be generated and solved according to the change in the situation, and processing may be performed based on the obtained solution. For example, in a case where the combination optimization problem is applied to a transaction device that electronically trades stocks in a financial transaction market, a new combination optimization problem is generated according to a price change of stocks, and a transaction is performed based on the obtained solution. Moreover, in a case where the combination optimization problem is applied to a control system that controls a moving object based on an image obtained by capturing a surrounding scene, a new combination optimization problem is generated according to a change in the image, and the moving object is controlled based on the obtained solution.

In addition, in such a system, a combination optimization problem corresponding to a plurality of types of situations may be generated, the generated combination optimization problem may be solved, and processing may be performed based on the obtained solution. The first of the plurality of types of situations may affect only a portion of the plurality of weight values included in the cost function of the combination optimization problem, while not affecting others. Even in such a case, such a system is required to generate a new combination optimization problem reflecting all the situations of the plurality of types in response to a change in only the situation of the first type, and perform processing based on the obtained solution.

The rate of change may be different depending on types such that the first type of situation among the plurality of types of situations may vary about once a day, whereas the second type of situation among the plurality of types of situations may vary about once every few seconds. In such a case, such a system is required to generate a new combination optimization problem reflecting all of a plurality of types of situations by following the situation changing at the highest speed, and perform processing based on the obtained solution.

BRIEF DESCRIPTION OF THE DRAWINGS

FIG. 1 is a diagram illustrating a model of an Ising problem;
FIG. 2 is a diagram illustrating internal variables used by a simulated bifurcation algorithm;
FIG. 3 is a flowchart illustrating a procedure of processing of a simulated bifurcation machine;
FIG. 4 is a diagram illustrating a configuration of an information processing system including an Ising machine;
FIG. 5 is a diagram illustrating a configuration of an information processing system including a simulated bifurcation machine;
FIG. 6 is a configuration diagram of a market system;
FIG. 7 is a configuration diagram of an information processing device according to the first embodiment;
FIG. 8 is a diagram illustrating a timing of a first process example of the information processing device;
FIG. 9 is a diagram illustrating a timing of a second process example of the information processing device;
FIG. 10 is a diagram illustrating an example of weight values stored in the solver device according to the second embodiment;
FIG. 11 is a configuration diagram of a solver device according to the third embodiment;
FIG. 12 is a configuration diagram of an arithmetic circuit;
FIG. 13 is a configuration diagram of an action arithmetic circuit;
FIG. 14 is a configuration diagram of a matrix arithmetic circuit according to the third embodiment;
FIG. 15 is a configuration diagram of a matrix arithmetic circuit according to the fourth embodiment;
FIG. 16 is a configuration diagram of a matrix arithmetic circuit according to the fifth embodiment;
FIG. 17 is a configuration diagram of a matrix arithmetic circuit according to the sixth embodiment;
FIG. 18 is a configuration diagram of a matrix arithmetic circuit according to the seventh embodiment;
FIG. 19 is a configuration diagram of a matrix arithmetic circuit according to the eighth embodiment;
FIG. 20 is a diagram illustrating an example of a configuration of a control system; and
FIG. 21 is a hardware configuration diagram of the information processing device.

## DETAILED DESCRIPTION

An information processing device according to an embodiment is a device that executes processing on data. The information processing device includes a solver device and an information processing circuit. The solver device is configured to store a plurality of first weight values and a plurality of second weight values. The solver device is configured to solve a combination optimization problem minimizing cost function including a plurality of weight values. The plurality of weight values is obtained by combining the plurality of first weight values and the plurality of second weight values. The information processing circuit is connected to the solver device. The information processing circuit is configured to repeatedly acquire first data as the data, and repeatedly acquire second data as the data asynchronously with a timing of acquiring the first data. The information processing circuit is configured to update the plurality of first weight values stored in the solver device on the basis of the first data, and update the plurality of second weight values stored in the solver device on the basis of the second data.

### Premise

Terms and techniques that are the premise of the description of the embodiments will be described.
The combination optimization problem is to define a cost function using a plurality of decision variables (for example, discrete variables) representing a state of a system to be optimized as arguments and solve a combination of values of a plurality of decision variables that minimizes the defined cost function.
The cost function includes a plurality of decision variables representing the state of the system as arguments, and is a linear or higher function of the decision variables. For example, the cost function is represented by a linear function or a quadratic function of a plurality of decision variables.
The cost function may be a cubic or higher function of the plurality of decision variables. In other words, the cost function is a function of summing a plurality of terms. Each of the terms is a function that multiplies one or more and a predetermined number or less of the plurality of decision variables by a coefficient.
The coefficient in each of the terms is a real number and is also referred to as a weight value. Each of the terms constituting the cost function is represented by multiplication of one or more decision variables among the plurality of decision variables and any one weight value among the plurality of weight values.
The state of the system expressed by the plurality of decision variables is referred to as a solution. A whole set of a plurality of solutions that is allowed to be taken by a state of a system is referred to as a solution space. A solution that gives the minimum value of the cost function is referred to as an exact solution. A solution that gives a value close to the minimum value of the cost function is referred to as a good solution.
The exact solution is to obtain an exact solution that gives a minimum value of a cost function of a combination optimization problem, and to ensure that the solution is an exact solution.
The heuristic solution is to find an exact solution that gives the minimum value of the cost function or a good solution that gives a value close to the minimum value of the cost function of a combination optimization problem. A heuristic solution is also referred to as a heuristic solution. The heuristic solution has no guarantee of an index representing the accuracy of the solution, namely, how close the heuristic solution gives a value to the minimum value of the cost function. The heuristic solution method can output a solution with practically significant accuracy in a shorter solving time than the exact solution method.

The calculation amount of the solution to the combination optimization problem is the amount of operation required to obtain a solution, for example, the number of times of product-sum operation or the like. The solving time required to obtain a solution to the combination optimization problem depends not only on the amount of calculation but also on the configuration of the computer machine that processes the calculation. For example, the higher the computational parallelism and the operating frequency of the computer machine, the shorter the solving time.

The quadratic unconstrained binary optimization (QUBO) problem is an unconstrained quadratic optimization problem in which the decision variable is binary. In the QUBO problem, each of terms included in the cost function is represented by a quadratic expression or a linear expression of the decision variable. The QUBO problem in a narrow definition is a binary variable with a decision variable of zero or one. In the embodiment, the QUBO problem represents a problem of definition in a narrow sense in which the decision variable is zero or one. In the narrow-sense definition QUBO problem, the decision variable may also be referred to as a bit variable.

The cost function of the QUBO problem is expressed by $H_{total_QUBO}$ of Expression (1).

$$H_{total_QUBO} = \sum_{i=1}^{N}\sum_{j=1}^{N} Q_{ij} b_i b_j = 2\sum_{i=1}^{N}\sum_{i<j}^{N} Q_{ij} b_i b_j + \sum_{i=1}^{N} Q_{ii} b_i \quad \cdots (1)$$

N is an integer of two or more and represents the number of decision variables. i and j represent an integer of one or more and N or less. $b_i$ is zero or one, and represents the i-th decision variable among the N decision variables. $b_j$ is zero or one, and represents the j-th decision variable among the N decision variables. $Q_{ij}$ represents coefficients of the i-th row and the j-th column included in the coefficient matrix (Q) of N×N. Note that $Q_{ij} = Q_{ji}$. $Q_{ii}$ is a coefficient included in the i-th row and the i-th column of the coefficient matrix (Q), and is a coefficient multiplied by the first-order term of the i-th decision variable. Q;; is referred to as a bias coefficient.

FIG. 1 is a diagram illustrating a model of an Ising problem. The Ising problem is a problem of searching a ground state of an Ising model. The Ising problem is one of the QUBO problems. The decision variable of the Ising problem represents a discrete variable of -1 or +1.

The cost function of the Ising problem is expressed by $H_{total_Ising}$ of Expression (2).

$$H_{total_Ising} = -\frac{1}{2}\sum_{i=1}^{N}\sum_{j=1}^{N} J_{ij}\, s_i s_j + \sum_{i=1}^{N} h_i s_i \quad \cdots (2)$$

N is an integer of two or more and represents the number of decision variables. i and j represent an integer of one or more and N or less. $s_i$ is -1 or +1, and represents the i-th decision variable among the N decision variables. $s_j$ is -1 or +1, and represents the j-th decision variable among the N decision variables. $J_{ij}$ represents coefficients of the i-th row and the j-th column included in the coefficient matrix (J) of N×N. Note that $J_{ij} = J_{ji}$. $h_i$ is a coefficient multiplied by a first-order term of the i-th decision variable. $h_i$ is referred to as a bias coefficient.

The QUBO problem in which the decision variable is s; corresponds to the problem of the ground state search of the Ising model, which is one of the magnetic body models in the statistical mechanics. Therefore, s; may also be referred to as a spin variable. Moreover, N, which is the number of decision variables, may also be referred to as the number of spins. In addition, $H_{total_Ising}$ may also be referred to as Ising energy. The vector represented by the N s;s having the minimum value of $H_{total_Ising}$ may be referred to as a ground state (ground spin arrangement).

The cost function of the QUBO problem and the cost function of the Ising problem differ only in the value of the constant. Therefore, the QUBO problem and the Ising problem are the same as a combination optimization problem. The QUBO problem and the Ising problem can be mutually converted. For example, the Ising problem and the QUBO problem are mutually converted by Expressions (3-1), (3-2), (3-3), and (3-4).

$$s_i = 2b_i - 1 \quad \cdots (3\text{-}1)$$

$$J_{ij} = -\frac{Q_{ij}}{2}\ (i \neq j) \quad \cdots (3\text{-}2)$$

$$J_{ii} = 0 \qquad \cdots (3\text{-}3)$$

$$h_i = \sum_{j=1}^{N} \frac{Q_{ij}}{2} \qquad \cdots (3\text{-}4)$$

The QUBO and Ising problems are known to be NP-complete. Many NP-hard problems can be converted into a QUBO problem or an Ising problem in polynomial time. Therefore, many practical combination optimization problems can be converted into the QUBO problem or the Ising problem.

The Ising machine is a device that solves an Ising problem. Many Ising machines solve Ising problems with heuristic solutions. Ising machines of various principles based on electronics, optics, quantum mechanics, statistical mechanics, and the like have been proposed. Many Ising machines can output an exact solution or a good solution in a short time.

The simulated bifurcation algorithm is an algorithm for solving a combination optimization problem. The simulated bifurcation algorithm is a heuristic solution algorithm.

For example, Hayato Goto, Kosuke Tatsumura and Alexander R. Dixon, "Combinatorial optimization by simulating adiabatic bifurcations in nonlinear Hamiltonian systems," Science Advances 5, eaav2372, 2019 and Hayato Goto, Kotaro Endo, Masaru Suzuki, Yoshisato Sakai, Taro Kanao, Yohei Hamakawa, Ryo Hidaka, Masaya Yamasaki and Kosuke Tatsumura, "High-performance combinatorial optimization based on classical mechanics", Science Advances 7, eabe7953, 2021 and JP 2021-060864 A, JP 2019-145010 A, JP 2019-159566 A, JP 2021-043667 A, and JP 2021-043589A disclose the simulated bifurcation algorithm. The simulated bifurcation algorithm is also referred to as a quantum inspired algorithm because it has been discovered with an idea from a quantum mechanical optimization method based on the quantum adiabatic theorem. The simulated bifurcation algorithm can solve a combination optimization problem in which the cost function is a quadratic function of a plurality of decision variables. The simulated bifurcation algorithm can also solve a combination optimization problem in which the cost function is a cubic or higher function of a plurality of decision variables, namely, a higher order binary optimization (HUBO) problem. For example, a simulated bifurcation algorithm that solves the HUBO problem is disclosed in JP 2021-043667 A. Moreover, the simulated bifurcation algorithm can also solve a combination optimization problem including variables of continuous values in some of or all decision variables. A simulated bifurcation algorithm that solves a combination optimization problem including variables of continuous values in some of or all the decision variables is disclosed in JP 2021-043589A.

The simulated bifurcation machine is a calculation apparatus that executes a process according to the simulated bifurcation algorithm. A simulated bifurcation machine that solves a QUBO problem or an Ising problem is an example of an Ising machine. In the present embodiment, the simulated bifurcation machine solves the Ising problem.

FIG. 2 is a diagram illustrating internal variables used by the simulated bifurcation algorithm.

In a case of solving a combination optimization problem in which a cost function is represented using N decision variables ($s_1$ to $s_N$), the simulated bifurcation algorithm uses N position variables ($x_1$ to $x_N$) and N momentum variables ($y_1$ to $y_N$) as internal variables. The simulated bifurcation algorithm uses 2×N internal variables.

N position variables ($x_i$) correspond to N decision variables ($s_i$) on a one-to-one basis. The i-th position variable ($x_i$) among the N position variables corresponds to the i-th decision variable ($s_i$) among the N decision variables. N momentum variables (y;) correspond to N decision variables ($s_i$) on a one-to-one basis. The i-th momentum variable ($y_i$) among the N momentum variables corresponds to the i-th decision variable ($s_i$) among the N decision variables.

FIG. 3 is a flowchart illustrating a procedure of a process of the simulated bifurcation machine. The simulated bifurcation machine executes a process according to the simulated bifurcation algorithm in the procedure illustrated in FIG. 3.

First, in S11, the simulated bifurcation machine acquires the Ising problem. Specifically, the simulated bifurcation machine acquires J, which is a matrix including N×N coefficients, and h including N bias coefficients.

Subsequently, in S12, the simulated bifurcation machine initializes 2×N internal variables, namely, N position variables ($x_1$ to $x_N$) and N momentum variables ($y_1$ to $y_N$). The simulated bifurcation machine may acquire both or one of the initial values of the N position variables ($x_1$ to $x_N$) and the initial values of the N momentum variables ($y_1$ to $y_N$) from the outside. Moreover, the simulated bifurcation machine may generate the initial values of the N position variables ($x_1$ to $x_N$) and the initial values of the N momentum variables ($y_1$ to $y_N$) by a random number generated by a random number generation circuit, or may set the initial values to predetermined values. Note that, since the simulated bifurcation machine is heuristic, even in the same problem, when at least either one of the initial values of the N position variables ($x_1$ to $x_N$) and the initial values of the N momentum variables ($y_1$ to $y_N$) is different, a different good solution may be output.

Subsequently, the simulated bifurcation machine repeats the process of S14 to S16 a preset number of times (loop processing between S13 and S17). The process of S14 to S16 is a matrix arithmetic process of matrix-multiplying N

position variables ($x_1$ to $x_N$) by a matrix including weight values of N rows × N columns, and a time evolution process of time-evolving the N position variables ($x_1$ to $x_N$) and the N momentum variables ($y_1$ to $y_N$).

In S14, the simulated bifurcation machine executes a y update process of updating each of the N momentum variables ($y_1$ to $y_N$). In the update process of the i-th momentum variable ($y_i$) in the y update processing, the simulated bifurcation machine updates the i-th momentum variable ($y_i$) by the N position variables ($x_1$ to $x_N$), the N coefficients ($J_{i,j}$) representing the interaction between the i-th position variable ($x_i$) in the N×N matrices (J) and the other (N-1) position variables ($x_{1 \text{ to } i-1}$, $x_{i+1 \text{ to } N}$), and the i-th bias coefficient ($h_i$).

Subsequently, in S15, the simulated bifurcation machine executes an x update process of updating each of the N position variables ($x_1$ to $x_N$). The simulated bifurcation machine updates the i-th position variable ($x_i$) by the i-th momentum variable ($y_i$) in the update process of the i-th position variable ($x_i$) in the x update processing.

Note that the simulated bifurcation machine may execute the process of S 14 and the process of S 15 in an order changed.

Subsequently, in S16, the simulated bifurcation machine executes a wall process on the position variable whose absolute value exceeds one among the N position variables ($x_1$ to $x_N$). Moreover, the simulated bifurcation machine also executes a wall process on the momentum variable corresponding to the position variable whose absolute value exceeds one. For example, in the wall process, the simulated bifurcation machine changes a value of the position variable whose absolute value exceeds one to a value whose absolute value is one or smaller than one in a state where the signs are the same. Moreover, for example, the simulated bifurcation machine changes a value of the momentum variable corresponding to the position variable whose absolute value exceeds one to zero in the wall processing.

The simulated bifurcation algorithm has variations in operations of the x update processing, the y update processing, and the wall processing. For example, variations of the simulated bifurcation algorithm include an adiabatic simulated bifurcation (aSB) algorithm, a ballistic simulated bifurcation (bSB) algorithm, and a discrete simulated bifurcation (dSB) algorithm.

In a case where the processing according to the adiabatic simulated bifurcation algorithm is executed, the simulated bifurcation machine executes an operation represented by Expression (4-1) in the y update processing (S14) and executes an operation represented by Expression (4-2) in the x update processing (S15). Note that, in a case where the processing according to the adiabatic simulated bifurcation algorithm is executed, the simulated bifurcation machine does not execute the wall process (S15).

$$y_i(t_{k+1}) = y_i(t_k) + \left\{ -Kx_i^3(t_k) - [a_0 - a(t_k)]x_i(t_k) - \eta h_i + c_0 \sum_{j=1}^{N} J_{i,j}\, x_j(t_k) \right\} \Delta_t \quad \cdots (4\text{-}1)$$

$$x_i(t_{k+1}) = x_i(t_k) + a_0 y_i(t_{k+1}) \Delta_t \quad \cdots (4\text{-}2)$$

In a case where the processing according to the ballistic simulated bifurcation algorithm is executed, the simulated bifurcation machine executes an operation represented by Expression (5-1) in the y update processing (S14), executes an operation represented by Expression (5-2) in the x update processing (S15), and executes an operation represented by Expression (5-3) in the wall processing (S16).

$$y_i(t_{k+1}) = y_i(t_k) + \left\{ -[a_0 - a(t_k)]x_i(t_k) - \eta h_i + c_0 \sum_{j=1}^{N} J_{i,j}\, x_j(t_k) \right\} \Delta_t \quad \cdots (5\text{-}1)$$

$$x_i(t_{k+1}) = x_i(t_k) + a_0 y_i(t_{k+1}) \Delta_t \quad \cdots (5\text{-}2)$$

$$\text{if } |x_i(t_{k+1})| > 1,\ \text{set } x_i(t_{k+1}) = \mathrm{sgn}\big(x_i(t_{k+1})\big) \text{ and } y_i(t_{k+1}) = 0 \quad \cdots (5\text{-}3)$$

In a case where the processing according to the discrete simulated bifurcation algorithm is executed, the simulated bifurcation machine executes an operation represented by Expression (6-1) in the y update processing (S14), executes an operation represented by Expression (6-2) in the x update processing (S15), and executes an operation represented by Expression (6-3) in the wall processing (S16).

$$y_i(t_{k+1}) = y_i(t_k) + \left\{ -[a_0 - a(t_k)]x_i(t_k) - \eta h_i + c_0 \sum_{j=1}^{N} J_{i,j}\mathrm{sgn}[x_i(t_k)] \right\} \Delta_t \quad \cdots (6\text{-}1)$$

$$x_i(t_{k+1}) = x_i(t_k) + a_0 y_i(t_{k+1})\Delta_t \quad \cdots (6\text{-}2)$$

$$\text{if } |x_i(t_{k+1})| > 1,\ \text{set } x_i(t_{k+1}) = \mathrm{sgn}\big(x_i(t_{k+1})\big) \text{ and } y_i(t_{k+1}) = 0 \quad \cdots (6\text{-}3)$$

In Expressions (4-1), (4-2), (5-1), (5-2), (5-3), (6-1), (6-2), and (6-3), each of $t_k$ and $t_{k+1}$ represent a time. $t_{k+1}$ is a time obtained by adding a unit time ($\Delta t$) to $t_k$.

$x_i(t_k)$ indicates a value of the i-th position variable ($x_i$) at the time ($t_k$). $x_i(t_{k+1})$ indicates a value of the i-th position variable ($x_i$) at the time ($t_{k+1}$). $y_i(t_k)$ indicates a value of the i-th momentum variable (y;) at the time ($t_k$). $y_i(t_{k+1})$ indicates a value of the i-th momentum variable ($y_i$) at the time ($t_{k+1}$).

K, ao, $\eta$, and co are predetermined constants. $a(t_k)$ is a function that changes according to a time. $a(t_k)$, where, for example, $a(t_1) = 0$, is a positive real number that increases as the time increases, and is a function that is ao at the end time (T) ($a(T) = a_0$). Moreover, $\mathrm{sgn}(x_i(t_k))$ is a function that outputs the sign of the i-th position variable ($x_i$) at the time ($t_k$), and is +1 when $x_i(t_k)$ is zero or more and -1 when $x_i(t_k)$ is less than zero.

In a case where the process of S14 to S 16 are executed a predetermined number of times, namely, in a case where the operation is executed until time t reaches final time T, the simulated bifurcation machine exits the loop processing between S13 and S 17 and advances the process to S18.

In S18, the simulated bifurcation machine outputs N position variables ($x_1$ to $x_N$) at the final time or N decision variables ($s_1$ to $s_N$) calculated based on the N position variables ($x_1$ to $x_N$) at the final time. The simulated bifurcation machine calculates the i-th decision variable ($s_i$) among the N decision variables ($s_1$ to $s_N$) based on sgn(x;).

When the process of S18 ends, the simulated bifurcation machine ends the process according to the simulated bifurcation algorithm.

Note that the number of repetitions of the time evolution processing (loop processing between S13 and S17) is determined in advance in accordance with the application. The calculation amount necessary for one cycle of processing (one cycle of S14 to S16) in the time evolution process does not change. Therefore, the simulated bifurcation machine can reduce the fluctuation in the solving time. Therefore, even when the simulated bifurcation machine is applied to a real-time system having a time constraint that the processing is required to be completed by a predetermined time, the solution can be reliably output by the predetermined time.

Moreover, for example, as disclosed in JP 2021-060864 A, the simulated bifurcation machine can be configured using a dedicated parallel processing circuit including a large number of arithmetic units. As a result, the simulated bifurcation machine can extremely shorten the calculation time for one cycle of processing in the time evolution process. In addition, unlike the case of software processing, in a simulated bifurcation machine mounted on a dedicated hardware circuit, any interrupt processing does not occur, so that the solving time is strictly fixed. For example, a simulated bifurcation machine mounted on a dedicated hardware circuit can fix the time until a solution is obtained in units of clock cycles. Therefore, in a case where the simulated bifurcation machine mounted on a dedicated hardware circuit is applied to a real-time system, it is possible to output a solution while more reliably protecting a time constraint.

FIG. 4 is a diagram illustrating a configuration of an information processing system including an Ising machine and a host device. An information processing system having a function of solving a combination optimization problem can be configured by, for example, an Ising machine and a host device. The host device executes a process other than a process executed by the Ising machine. In this case, the Ising machine is introduced for the purpose of reducing the solving time of the combination optimization problem and is considered as an accelerator or an off-loader. The host device includes a general-purpose processor, an off-loader other than an Ising machine, a memory, a storage, a sensor, an actuator, a communication interface, and the like.

The host device provides the Ising machine with at least information identifying the QUBO problem (matrix (Q)) or information identifying the Ising problem (matrix (J) and bias coefficient array (h)). The Ising machine may acquire information identifying the QUBO problem (matrix (Q)) and convert it into information identifying the Ising problem (matrix (J) and bias coefficient array (h)). Then, after the optimization processing, the Ising machine returns arrangement information ($s^{opt}$) representing N decision variables ($s_1$ to $s_N$) as a solution to the host device.

FIG. 5 is a diagram illustrating a configuration of an information processing system including a simulated bifurcation machine and a host device.

An information processing system having a function of solving a combination optimization problem may include a simulated bifurcation machine as an Ising machine. In this case, the host device provides the simulated bifurcation machine with information (matrix (J) and bias coefficient (h)) for identifying the Ising problem. The host device may provide the simulated bifurcation machine with initial values of the N position variables ($x_1$ to $x_N$) and initial values of the N momentum variables ($y_1$ to $y_N$). In addition, the host device may provide the simulated bifurcation machine with various constants, functions (for example, K, ao, co, a(t) and $\Delta$t), and the like used in the simulated bifurcation algorithm. After the optimization processing, the simulated bifurcation machine may return, as a solution, the arrangement information ($x^{opt}$) representing N position variables ($x_1$ to $x_N$) to the host device, instead of the arrangement information ($s^{opt}$) representing N decision variables ($s_1$ to $s_N$).

First Embodiment

Next, a market system 10 according to the first embodiment will be described.

FIG. 6 is a diagram illustrating a configuration of the market system 10. The market system 10 executes electronic transactions of a plurality of targets by a plurality of participants. More specifically, the market system 10 receives a buy order and a sell order from each of the participants for each of the targets, matches the price and the quantity of the received buy order with the price and the quantity of the sell order, and electronically establishes a transaction.

In the present embodiment, the market system 10 executes a trade transaction of a plurality of stocks (a plurality of names of stocks) as electronic transactions of a plurality of targets. Note that the target is not limited to stocks as long as it can be traded in the market, and may be securities such as bonds, stock investment trusts, real estate investment trusts, and futures thereof, financial products such as foreign exchange, interest rates, and interest rate futures, products such as gold, crude oil, and grains, and product futures thereof.

The market system 10 includes a market server device 12 and a plurality of client devices 14.

The market server device 12 is a computer used by a market manager. The market server device 12 is connected to a plurality of client devices 14 via a network.

Each of the client devices 14 is a device used by participants in the market. Each of the client devices 14 is realized by, for example, a computer.

Each of the client devices 14 determines which stock among the plurality of stocks to trade. Each of the client devices 14 generates an order packet including transaction information about the stock determined to be traded among the plurality of stocks to transmit the order packet to the market server device 12. The order packet includes, as transaction information, for example, identification information for identifying a stock to be traded among a plurality of stocks, a trade direction representing a sell order or a buy order for the stock identified by the identification information, a price (namely, the stock price), and a quantity (namely, the number of stocks). Note that the price is not limited to a specific value, and may be, for example, a value at the time of establishment of trade after the start of the market, or a value having a constant width.

The market server device 12 executes transactions of a plurality of stocks. The market server device 12 includes a reception unit 16, a matching unit 17, and a distribution unit 18.

The reception unit 16 receives an order packet transmitted from each of the client devices 14. The reception unit 16 provides the information about the received order packet to the matching unit 17.

The matching unit 17 performs matching between the price and the quantity of the sell order and the price and the quantity of the buy order for each of the stocks, and establishes a transaction between the sell order and the buy order in which the price and the quantity match in order of reception. The matching unit 17 provides the distribution unit 18 with information about an order for which a transaction has been established and information about an order for which a transaction has not been established.

Based on the information acquired from the matching unit 17, the distribution unit 18 simultaneously distributes the market state packet including the information indicating the stock transaction status to the plurality of client devices 14.

For example, the market state packet is generated for each of the stocks. The market state packet includes identification information for identifying stocks, and a transaction price that is the latest price at which a transaction has been established for the stocks identified by the identification information.

In addition, the market state packet may include indication information for each of the stocks. The indication information is information indicating the price and the quantity of the buy order for which the transaction is not established and information indicating the price and the quantity of the sell order for which the transaction is not established for each of the stocks.

The distribution unit 18 irregularly distributes the market state packet. For example, when the transaction is established, the distribution unit 18 distributes the market state packet for the stock for which the transaction is established. For example, each of the client devices 14 acquires a market state packet irregularly distributed, and determines which stock among the plurality of stocks to trade based on information included in the acquired market state packet. Then, each of the client devices 14 generates an order packet for the determined stock to transmit the order packet to the market server device 12.

An information processing device 20 according to the present embodiment functions as the client device 14 in the market system 10. The information processing device 20 may be realized by a computer including a processor, a memory, and the like, or may have a configuration including a dedicated hardware circuit in addition to the processor, the memory, and the like.

Here, the information processing device 20 generates a combination optimization problem based on market state packets acquired irregularly, solves the generated combination optimization problem, and determines whether to trade for each of the stocks based on a solution of the combination optimization problem obtained by the solving.

In the present embodiment, the information processing device 20 uses the function shown in Expression (7) as the cost function in the combination optimization problem.

$$Cost = \sum_{i=1}^{N}\left\{\left(\alpha - \left|\frac{p_i(t)}{p_i(0)} - 1\right|\right) * b_i\right\} + \beta \sum_{i=1}^{N}\sum_{j=1}^{N}\{\sigma_{i,j} * b_i * b_j\} \quad \cdots (7)$$

In Expression (7), N is an integer of two or more, and represents the number of issues of a plurality of stocks traded in the market server device 12. i and j are integers of one or more and N or less, and are indexes for identifying each of the stocks.

The cost function of Expression (7) includes N decision variables. $b_i$ is a binary of 0 or 1, and is a decision variable indicating whether to trade the i-th stock among the plurality of stocks. $b_j$ is a binary value of 0 or 1, and is a decision variable indicating whether to trade the j-th stock among the plurality of stocks. In the present embodiment, $b_i$ and $b_j$ represent 1 in a case where transaction is performed and 0 in a case where transaction is not performed.

t represents a time between the transaction start time and the transaction end time in one day. t is 0 at the transaction start time, and increases as time passes from the transaction start time. In the present embodiment, t is an integer and represents time by indexing.

p;(t) is a transaction price at time t in the i-th stock, namely, a stock price at time t. p;(0) is the transaction price of the i-th stock at the transaction start time, namely, a stock price at the transaction start time.

$p_i(t)/p_i(0)$ -1 represents a rate of change based on the transaction price at the transaction start time. In a case where $p_i(t)/p_i(0)$ -1 is greater than 0, it indicates that the price of the i-th stock is rising, and in a case where it is less than 0, it indicates that the price of the i-th stock is falling.

$\sigma_{i,j}$ is a correlation value representing a correlation between the i-th stock and the j-th stock. For example, $\sigma_{i,j}$ is an average value of the daily rate of changes between the i-th stock and the j-th stock from the day before the transaction date to a predetermined day before (for example, five days before). The daily rate of change in the i-th stock is the ratio of the closing price of the i-th stock on the day to the closing price of the i-th stock on the previous day. The daily rate of change difference between the i-th stock and the j-th stock is a difference between the daily rate of change in the i-th stock and the daily rate of change in the j-th stock. Therefore, $\sigma_{i,j}$ decreases as the correlation between the daily rate of change in the i-th stock and the daily rate of change in the j-th stock increases.

$\alpha$ and $\beta$ are preset constants.

The first term on the right side of the cost function of Expression (7) is a term for evaluating the difference between the rate of change in each of the stocks and the preset $\alpha$. Therefore, the cost function of Expression (7) decreases in a case of trading stocks with a rate of change greater than $\alpha$.

The second term on the right side of the cost function of Expression (7) is a term for evaluating the magnitude of the correlation of the daily rate of change difference for each combination of two stocks included in the N stocks. Therefore, the cost function of Expression (7) decreases as, for example, a combination of two stocks whose trade directions are opposite in which the correlation of the difference between the daily rates of change is small is traded. In addition, the cost function of Expression (7) decreases, for example, in a case where a stock group including a plurality of stocks in which the number of stocks for which a sell order is placed and the number of stocks for which a buy order is placed are the same, the stock group having a small correlation between the daily rate of change differences is traded.

From the above, in the combination optimization problem that minimizes the cost function of Expression (7), it is possible to obtain a solution in which the risk is dispersed so as to increase the number of sets of two stocks having a small correlation, for example, having a small daily rate of change difference while trading stocks having a large rate of change.

Note that the information processing device 20 determines a trade direction for the i-th stock, namely, whether to place a sell order or a buy order, based on the rate of change. For example, in a case of placing a buy order in the case of a rising trend, namely, in a case of market follower, the information processing device 20 places a buy order in a case where the rate of change is positive, and places a sell order in a case where the rate of change is negative. On the other hand, for example, in a case of placing a sell order in a case of an upward trend, namely, in a case of contrarian, the information processing device 20 places a sell order in a case where the rate of change in the rate of change is positive, and places a buy order in a case where the rate of change in the rate of change is negative. In the present embodiment, the information processing device 20 places a sell order in a case where the rate of change is positive, and places a buy order in a case where the rate of change is negative.

In addition, the rate of change in the i-th stock changes every time the transaction price of the i-th stock changes. Therefore, the first term on the right side of the cost function of Expression (7) changes according to a change in the transaction price of any of the N stocks. For example, the first term on the right side of the cost function in Expression (7) may change on the order of a few nanoseconds in time.

On the other hand, the daily rate of change difference between the i-th stock and the j-th stock changes at the transaction end time. Therefore, the second term on the right side of the cost function of Expression (7) changes every day. As described above, the update time interval of the second term on the right side of the cost function of Expression (7) is very long as compared with that of the first term on the right side of the cost function of Expression (7).

In addition, the rate of change in the i-th stock irregularly changes. Therefore, the change timing of the first term on the right side of the cost function of Expression (7) and the change timing of the second term on the right side of the cost function of Expression (7) are asynchronous.

The information processing device 20 acquires a solution of the combination optimization problem that minimizes such a cost function, namely, the values of the N decision variables. The information processing device 20 determines to trade the stock corresponding to the decision variable having a value of 1 among the N decision variables. Then, the information processing device 20 generates an order packet including transaction information about the stock determined to execute transaction among the plurality of stocks to transmit the order packet to the market server device 12.

Note that the information processing device 20 may solve a combination optimization problem that minimizes a cost function other than the cost function shown in Expression (7).

FIG. 7 is a diagram illustrating a configuration of the information processing device 20 according to the first embodiment.

The information processing device 20 acquires data, generates a combination optimization problem based on the acquired data, and generates output data based on a solution of the generated combination optimization problem. The information processing device 20 acquires first data and second data as data. Then, the information processing device 20 outputs the generated output data to a first device different from the information processing device 20.

In the present embodiment, the information processing device 20 receives, as the first data, a market state packet irregularly provided from the market server device 12. Moreover, the information processing device 20 acquires, as the second data, a correlation value for each combination of two stocks included in the N stocks. For example, the information processing device 20 acquires a daily rate of change difference as a correlation value of a combination of two stocks for each day. The information processing device 20 generates a plurality of weight values included in the cost function in the combination optimization problem based on the received market state packet and the correlation value for each combination of two stocks included in the N stocks. The information processing device 20 solves a combination optimization problem that minimizes a cost function including a plurality of generated weight values. The information processing device 20 generates an order packet as output data based on the solution of the combination optimization problem obtained by the solving. In the present embodiment, the information processing device 20 transmits the generated order packet to the market server device 12 which is an example of the first device.

The information processing device 20 includes a first input memory 31, a second input memory 32, a first acquisition unit 33, a second acquisition unit 34, a solver device 40, a first update unit 41, a second update unit 42, and a process execution unit 46.

The first input memory 31 stores a plurality of first input values on which a plurality of weight values included in the cost function of the combination optimization problem is based. In the present embodiment, the first input memory 31 stores values corresponding to a plurality of transaction prices as a plurality of first input values. The values corresponding to the plurality of transaction prices stored in the first input memory 31 correspond to the plurality of stocks on a one-to-one basis. The first input memory 31 stores a value corresponding to the transaction price for each of the stocks. The value corresponding to the transaction price may be the transaction price or a value obtained by performing predetermined processing or calculation on the transaction price. For example, the value according to the transaction price may be a rate of change representing a ratio of the latest transaction price to the transaction price at the transaction start time.

The second input memory 32 stores a plurality of second input values on which a plurality of weight values included in the cost function of the combination optimization problem is based. In the present embodiment, the second input memory 32 stores the correlation value for each combination of two stocks among the plurality of stocks for all the combinations of two stocks as the plurality of second input values. For example, in a case where the plurality of stocks are N stocks, where N is an integer of two or more, the second input memory 32 stores {N×(N -1)/2} correlation values. For example, the correlation value between the i-th stock among the N stocks and the j-th stock among the N stocks is a daily rate of change difference between the i-th stock and the j-th stock.

The first acquisition unit 33 acquires first data repeatedly given irregularly. The first data acquired by the first acquisition unit 33 includes first input information about at least one target among the plurality of targets. In a case of acquiring the first data, the first acquisition unit 33 rewrites the first input value corresponding to the target related to the first input information included in the acquired first data among the plurality of first input values stored in the first input memory 31 based on the first input information included in the acquired first data.

In the present embodiment, the first acquisition unit 33 irregularly and repeatedly acquires the market state packet, which is an example of the first data to be provided, from the market server device 12. The market state packet includes a transaction price of at least one stock among the plurality of stocks as the first input information. Then, in a case of acquiring the market state packet, the first acquisition unit 33 rewrites a value corresponding to the transaction price for the stock indicated in the acquired market state packet among the values corresponding to the transaction prices for the plurality of stocks stored in the first input memory 31 based on the transaction price included in the acquired market state packet.

The second acquisition unit 34 acquires the repeatedly provided second data. The second data acquired by the second acquisition unit 34 includes second input information related to a set of two targets among the plurality of targets. In a case of acquiring the second data, the second acquisition unit 34 rewrites the second input value corresponding to a set of the two targets related to the second input information included in the acquired second data among the plurality of second input values stored in the second input memory 32 based on the second input information included in the acquired second data.

In the present embodiment, the second acquisition unit 34 acquires closing price information, which is an example of the repeatedly provided second data, from the stock information providing device. The stock information providing device may be a device provided on a network, and may be, for example, the market server device 12 or a device other than the market server device 12. The closing price information includes, as the second input information, a correlation value of a set of two stocks among the plurality of stocks. In a case of acquiring the closing price information, the second acquisition unit 34 rewrites the correlation value included in the acquired closing price information among the correlation values for combinations of two stocks stored in the second input memory 32 based on the correlation value included in the acquired closing price information.

The second acquisition unit 34 acquires the second data asynchronously with the timing at which the first acquisition unit 33 acquires the first data. For example, the first acquisition unit 33 acquires the market state packet every time the market server device 12 distributes the market state packet. Therefore, the first acquisition unit 33 may repeatedly acquire the market state packet in a time order of several seconds or several milliseconds, for example. On the other hand, the second acquisition unit 34 acquires closing price information in a period from the transaction end time to the transaction start time of the next day. For this reason, the second acquisition unit 34 repeatedly acquires the closing price information in the order of time such as every day. Then, the second acquisition unit 34 acquires closing price information at timing asynchronous to the market state packet.

In addition, the second acquisition unit 34 acquires the correlation values for all of the sets of two stocks that can be combined by a plurality of stocks every day. Then, the second acquisition unit 34 rewrites the correlation values stored in the second input memory 32 for all of the sets of two stocks combinable by the plurality of stocks every day.

The solver device 40 solves a combination optimization problem that minimizes a cost function including a plurality of weight values. Then, the solver device 40 outputs a solution of the combination optimization problem obtained by the solving. In the present embodiment, the solver device 40 is a simulated bifurcation machine that is one of the Ising machines, and is implemented in a dedicated hardware circuit. Note that the solver device 40 may solve the combination optimization problem based on another algorithm instead of the simulated bifurcation machine.

The solver device 40 includes a first weight memory 51 and a second weight memory 52.

The first weight memory 51 stores a plurality of first weight values. The second weight memory 52 stores a plurality of second weight values. The plurality of weight values included in the cost function is generated by combining the plurality of first weight values and the plurality of second weight values. Therefore, in the solving process of the combination optimization problem, the solver device 40 generates a plurality of weight values by combining the plurality of first weight values stored in the first weight memory 51 and the plurality of second weight values stored in the second weight memory 52, and solves the combination optimization problem.

In the present embodiment, the first weight memory 51 stores the coefficients included in the first term on the right side included in the cost function shown in Expression (7) as a plurality of first weight values. In the present embodiment, each of the first weight values stored in the first weight memory 51 is a coefficient of a first-order term in the cost function which is a quadratic function, namely, a coefficient included in the bias coefficient array (h). Moreover, in the present embodiment, the second weight memory 52 stores the coefficients included in the second term on the right side included in the cost function shown in Expression (7) as a plurality of second weight values. In the present embodiment, each of the second weight values stored in the second weight memory 52 is a coefficient of a second-order term in the cost function that is a quadratic function, namely, a coefficient included in the matrix (J).

The solver device 40 starts solving the combination optimization problem in response to updating one first weight value of the plurality of first weight values stored in the first weight memory 51 and the plurality of second weight values stored in the second weight memory 52. As a result, in a case where a plurality of weight values included in the cost function changes, namely, in a case where the combination optimization problem changes, the solver device 40 can output the solution of the changed combination optimization problem.

The first update unit 41 generates a plurality of first weight values based on the first data acquired by the first acquisition unit 33, and updates the plurality of first input values stored in the first input memory 31. More specifically, the first update unit 41 generates a plurality of first weight values based on the plurality of first input values stored in the first input memory 31, and writes the plurality of generated first weight values into the first weight memory 51.

In the present embodiment, the first update unit 41 generates the bias coefficient array (h) based on the first term on the right side included in the cost function shown in Expression (7), and writes the generated bias coefficient array (h) into the first weight memory 51. More specifically, the first update unit 41 generates the bias coefficient array (h) obtained by the first term on the right side of Expression (7) based on the values corresponding to the transaction prices of the plurality of stocks stored in the first input memory 31, and writes the generated bias coefficient array (h) into the first weight memory 51.

In addition, the first update unit 41 generates a plurality of first weight values in response to acquiring the first data or in a preset first cycle, and writes the plurality of first weight values in the first weight memory 51. In the present embodiment, the first update unit 41 generates a plurality of first weight values in response to acquiring the market state packet by the first acquisition unit 33 or in a preset first cycle, and writes the plurality of first weight values in the first weight memory 51.

However, the first update unit 41 does not update the plurality of first weight values stored in the first weight memory 51 during the solving by the solver device 40. In addition, the preset first cycle may not be every constant time, and may vary with time.

The second update unit 42 generates a plurality of second weight values based on the second data acquired by the second acquisition unit 34, and updates the plurality of second input values stored in the second input memory 32. More specifically, the second update unit 42 generates a plurality of second weight values based on the plurality of second input values stored in the second input memory 32, and writes the plurality of generated second weight values into the second weight memory 52.

In the present embodiment, the second update unit 42 generates a matrix (J) based on the second term on the right side included in the cost function shown in Expression (7), and writes the generated matrix (J) into the second weight memory 52. More specifically, the second update unit 42 generates the matrix (J) obtained by the second term on the right side of Expression (7) based on the plurality of correlation values stored in the second input memory 32, and writes the generated matrix (J) into the second weight memory 52.

In addition, the second update unit 42 generates a plurality of second weight values in response to acquiring the second data or in a preset second cycle and writes the plurality of second weight values in the second weight memory 52. In the present embodiment, the second update unit 42 generates a plurality of second weight values in response to acquiring closing price information by the second acquisition unit 34 or in a preset second cycle, and writes the plurality of second weight values in the second weight memory 52.

However, the second update unit 42 does not update the plurality of second weight values stored in the second weight memory 52 during the solving by the solver device 40. In addition, the preset second cycle may not be every constant time, and may vary with time.

The process execution unit 46 acquires a solution of the combination optimization problem from the solver device 40. In the present embodiment, the process execution unit 46 acquires the values (0 or 1) of the plurality of decision variables ($b_1$ to $b_N$) included in Expression (7) as solutions. The process execution unit 46 executes a process based on the acquired solution in response to acquiring the solution from the solver device 40.

For example, in a case where the solution of the combination optimization problem is acquired from the solver device 40, the process execution unit 46 generates output data including output information indicating that a predetermined operation is performed on at least one stock identified by the solution among the plurality of stocks based on the acquired solution. Then, the process execution unit 46 outputs the output data to the first device.

In the present embodiment, in a case of acquiring the solution of the combination optimization problem from the solver device 40, the process execution unit 46 generates an order packet that is an example of output data. The order packet includes, as the output information, transaction information indicating that a buy order or a sell order, which is a predetermined operation, is to be placed for the stock corresponding to the decision variable having the value (1) indicating that the transaction is to be performed among the values of the plurality of decision variables ($b_1$ to $b_N$). Then, the process execution unit 46 outputs the generated order packet to the market server device 12 which is an example of the first device.

FIG. 8 is a timing chart illustrating a first process example of the information processing device 20. The information processing device 20 executes a process in the procedure illustrated in FIG. 8, for example.

The first acquisition unit 33 acquires a market state packet from the market server device 12 ($t_1$ and $t_5$ in FIG. 8). In a case of acquiring the market state packet, the first acquisition unit 33 rewrites a value corresponding to the transaction price of the stock related to the transaction price included in the market state packet among the values corresponding to the transaction prices of the plurality of stocks stored in the first input memory 31.

In a case where any of the values corresponding to the plurality of transaction prices stored in the first input memory 31 is rewritten by the first acquisition unit 33, the first update unit 41 generates a plurality of first weight values based on the value corresponding to the transaction price of each of the stocks stored in the first input memory 31. Then, the first update unit 41 writes the plurality of generated first weight values into the first weight memory 51 of the solver device 40, and causes the solver device 40 to execute a solving process ($t_2$ and $t_6$ in FIG. 8).

The second acquisition unit 34 acquires closing price information ($t_9$ in FIG. 8). In a case of acquiring closing price information, the second acquisition unit 34 rewrites the plurality of correlation values stored in the second input memory 32.

In a case where the plurality of correlation values stored in the second input memory 32 is rewritten by the second acquisition unit 34, the second update unit 42 generates a plurality of second weight values based on the plurality of correlation values stored in the second input memory 32. Then, the second update unit 42 writes the plurality of generated second weight values into the second weight memory 52 of the solver device 40, and causes the solver device 40 to execute the solving process (tio in FIG. 8).

The solver device 40 starts the solving process after the plurality of first weight values is written into the first weight memory 51 and after the plurality of second weight values is written into the second weight memory 52. In a case where the solving process is completed, the solver device 40 gives the solution of the combination optimization problem to the process execution unit 46 ($t_3$, $t_7$, $t_{11}$ in FIG. 8).

The process execution unit 46 generates an order packet in response to acquiring the solution of the combination optimization problem from the solver device 40. Then, the process execution unit 46 outputs the generated order packet to the market server device 12 ($t_4$, ts, $t_{12}$ in FIG. 8).

FIG. 9 is a timing chart illustrating a second process example of the information processing device 20. The information processing device 20 may execute processing in the procedure illustrated in FIG. 9, for example.

The solver device 40 may start the solving process only in a case where either the plurality of first weight values stored in the first weight memory 51 or the plurality of second weight values stored in the second weight memory 52 is updated. For example, even in a case where the plurality of second weight values stored in the second weight memory 52 is rewritten by the second update unit 42 (time $t_{21}$ in FIG. 9), the solver device 40 does not start the solving process. As a result, for example, the information processing device 20 can prevent generation and output of the order packet in a period from the stock transaction end time by the market server device 12 to the next transaction start time.

In addition, the first update unit 41 may the execute the process of generating a plurality of first weight values and writing the plurality of generated first weight values into the first weight memory 51 every certain time regardless of the acquisition of the market state packet by the first acquisition unit 33. For example, in the example of FIG. 9, the first update unit 41 executes a process of generating a plurality of first weight values and writing a plurality of first weight values every time T from the transaction start time.

As described above, the information processing device 20 according to the present embodiment generates a plurality of first weight values in accordance with the market state packet and writes the plurality of first weight values in the first weight memory 51, and generates a plurality of second weight values in accordance with the closing price information and writes the plurality of second weight values in the second weight memory 52. As a result, the information processing device 20 does not need to generate a plurality of second weight values in a case where the market state packet is acquired, and does not need to generate a plurality of first weight values in a case where the closing price information is acquired. Therefore, in a case where either the market state packet or the closing price information is acquired, the information processing device 20 does not need to generate and write all of the plurality of weight values, so that the combination optimization problem to be executed by the solver device 40 can be efficiently updated.

## Second Embodiment

Next, a market system 10 according to the second embodiment will be described. Since the market system 10 according to the second embodiment has substantially the same function and configuration as those of the first embodiment, elements having substantially the same function and configuration are denoted by the same reference numerals, and detailed description thereof will be omitted except for differences.

FIG. 10 is a diagram illustrating a plurality of first weight values stored in the first weight memory 51 and a plurality of second weight values stored in the second weight memory 52 according to the second embodiment.

The information processing device 20 according to the second embodiment solves the QUBO problem that minimizes the cost function, which is a quadratic function including N decision variables, as an Ising problem that minimizes the Ising model. In this case, in the solving, the solver device 40 generates a matrix (J) including correlation coefficients of N rows $\times$ N columns and a bias coefficient array (h) including N bias coefficients based on the plurality of first weight values stored in the first weight memory 51 and the plurality of second weight values stored in the second weight memory 52.

In the second embodiment, the first update unit 41 generates a first matrix (J1) including first weight values of N rows $\times$ N columns as a plurality of first weight values, and writes the first matrix (J1) in the first weight memory 51. In addition, the second update unit 42 generates a second matrix (J2) including second weight values of N rows $\times$ N columns as the plurality of second weight values, and writes the second matrix (J2) in the second weight memory 52.

Then, in a case of executing an operation on the weight value ($J_{i,j}$) of the i-th row and the j-th column in the matrix (J), the solver device 40 reads and adds the first weight value ($J1_{i,j}$) of the i-th row and the j-th column in the first matrix (J1) and the second weight value ($J2_{i,j}$) of the i-th row and the j-th column in the second matrix (J2). As a result, the solver device 40 can execute processing using the weight value ($J_{i,j}$) of the i-th row and the j-th column in the matrix (J) in the solving process.

Note that the solver device 40 may execute subtraction, multiplication, or division instead of addition of the first weight value ($J1_{i,j}$) and the second weight value ($J2_{i,j}$). Alternatively, the solver device 40 may perform a predetermined function operation using the first weight value ($J1_{i,j}$) and the second weight value ($J2_{i,j}$) as arguments.

Moreover, in the second embodiment, the first update unit 41 may write, as the plurality of first weight values, a first array (h1) including N first weight values in the first weight memory 51 instead of or in addition to the first matrix (J1) including the first weight values of N rows $\times$ N columns. In addition, the second update unit 42 may write, as the plurality of first weight values, a second array (h2) including N second weight values in the second weight memory 52 instead of or in addition to the second matrix (J2) including the second weight values of N rows $\times$ N columns.

Then, in a case where the i-th weight value ($h_i$) in the array (h) including the N bias coefficients is operated, the solver device 40 reads the i-th first weight value ($h1_i$) in the first array (h1) and the i-th second weight value (h2;) in the second array (h2) and adds the read values. Thereby, the solver device 40 can execute a process using the i-th weight value ($h_i$) in the array (h) in the solving process.

Note that the solver device 40 may execute subtraction, multiplication, or division instead of addition of the i-th first weight value ($h1_i$) in the first array (h1) and the i-th second weight value (h2;) in the second array (h2). Alternatively, the solver device 40 may perform a predetermined function operation using the i-th first weight value ($h1_i$) in the first array (h1) and the i-th second weight value (h2;) in the second array (h2) as arguments.

For example, in the second embodiment, in a case of using the cost function shown in Expression (7), the first update unit 41 generates the first array (h1) representing the coefficients of the first term on the right side of Expression (7) and the first matrix (J1) in which all the coefficients are 0, and writes the first array (h1) and the first matrix (J1) into the first weight memory 51. In addition, in the second embodiment, in a case of using the cost function shown in Expression (7), the second update unit 42 generates the second array (h2) in which all coefficients are 0 and the second matrix (J2) representing the coefficients of the second term on the right side of Expression (7), and writes the second array (h2) and the second matrix (J2) into the second weight memory 52. As a result, the solver device 40 can calculate a solution to the optimization problem that minimizes the cost function shown in Expression (7).

## Third Embodiment

Next, a market system 10 according to the third embodiment will be described. Since the market system 10 according to the third embodiment has substantially the same function and configuration as those of the second embodiment, elements having substantially the same function and configuration are denoted by the same reference numerals, and detailed description thereof will be omitted except for differences.

FIG. 11 is a diagram illustrating a configuration of the solver device 40 according to the third embodiment. The information processing device 20 according to the third embodiment includes a solver device 40 that executes a simulated bifurcation algorithm.

The solver device 40 includes an arithmetic circuit 71, an input circuit 72, an output circuit 73, and a setting circuit 74.

The arithmetic circuit 71 increases t, which is a parameter representing time, by a unit time ($\Delta t$) from the initial time (for example, 0) to the end time. The arithmetic circuit 71 calculates a first variable ($x_i$) and a second variable ($y_i$) associated with each of the N virtual points (virtual particles). The N virtual points correspond to N spins in the Ising model. The i-th virtual point among the N virtual points corresponds to the i-th spin among the N spins in the Ising model.

The first variable ($x_i$) is a position variable representing the position of the corresponding virtual point. The second variable ($y_i$) is a momentum variable representing the momentum of the corresponding virtual point.

The arithmetic circuit 71 sequentially and alternately calculates each of the N first variables ($x_i$) and each of the N second variables ($y_i$) every unit time from the initial time to the end time. More specifically, the arithmetic circuit 71 executes the operations indicated by the algorithms of Expressions (4-1) and (4-2) for each unit time from the initial time to the end time. Note that the arithmetic circuit 71 may execute the operations indicated by the algorithms of Expressions (5-1), (5-2), and (5-3), or may execute the operations indicated by the algorithms of Expressions (6-1), (6-2), and (6-3). Then, the arithmetic circuit 71 binarizes the value (The position of each of the N virtual points) of each of the N first variables ($x_i$) at the end time to calculate the solution of the combination optimization problem.

Prior to the arithmetic process by the arithmetic circuit 71, the input circuit 72 acquires the initial values of the N first variables ($x_i$) and the N second variables ($y_i$) at the initial time and gives the initial values to the arithmetic circuit 71. The output circuit 73 acquires the solution of the combination optimization problem from the arithmetic circuit 71 after the end of the arithmetic process by the arithmetic circuit 71. Then, the output circuit 73 outputs the acquired solution. The setting circuit 74 sets each parameter to the arithmetic circuit 71 prior to the arithmetic process by the arithmetic circuit 71.

FIG. 12 is a diagram illustrating a block configuration of the arithmetic circuit 71. In the description of FIG. 12, the target time (second time) is any time in a case where the time from the initial time to the end time is divided for each unit time. The immediately preceding time (first time) is a time one unit time before the target time. In FIG. 12, the immediately preceding time (first time) is represented as $t_1$. The target time (second time) is represented as $t_2$.

The arithmetic circuit 71 includes an X memory 81, a Y memory 82, an action arithmetic circuit 83, a time evolution circuit 84 (first circuit), and a control circuit 85.

The X memory 81 stores N first variables ($x_i(t_1)$) at the immediately preceding time ($t_1$). In the X memory 81, the stored N first variables ($x_i(t_1)$) at the immediately preceding time ($t_1$) are rewritten with the update of the time. In the X memory 81, in a case where the N first variables ($x_i(t_2)$) at the target time ($t_2$) are calculated, the calculated N first variables ($x_i(t_2)$) at the target time ($t_2$) are written as the N first variables ($x_i(t_1)$) at the new immediately preceding time ($t_1$). Prior to the operation, the setting circuit 74 writes the N first variables $x_i$ at the initial time into the X memory 81.

The Y memory 82 stores N second variables ($y_i(t_1)$) at the immediately preceding time ($t_1$). In the Y memory 82, the stored N second variables ($y_i(t_1)$) at the immediately preceding time ($t_1$) are rewritten with the update of the time. In the Y memory 82, in a case where the N second variables ($y_i(t_2)$) at the target time ($t_2$) are calculated, the calculated N second variables (Yi(tz)) at the target time ($t_2$) are written as the N second variables (yi(ti)) at the new immediately preceding time ($t_1$). Prior to the operation, the setting circuit 74 writes the N second variables y; at the initial time into the Y memory 82.

The action arithmetic circuit 83 acquires N first variables ($x_j(t_1)$) at the immediately preceding time ($t_1$) from the X memory 81. Then, the action arithmetic circuit 83 calculates an update value (zi(ti)) at the immediately preceding time ($t_1$) for each of the N virtual points.

The time evolution circuit 84 acquires the update value (zi(ti)) at the immediately preceding time ($t_1$) from the action arithmetic circuit 83 for each of the N virtual points. The time evolution circuit 84 acquires the first variable ($x_i(t_1)$) at the immediately preceding time ($t_1$) from the X memory 81 and acquires the second variable ($y_i(t_1)$) at the immediately preceding time ($t_1$) from the Y memory 82 for each of the N virtual points. Then, the time evolution circuit 84 calculates the first variable ($x_i(t_2)$) at the target time ($t_2$) for each of the N virtual points, and rewrites the first variable ($x_i(t_1)$) at the immediately preceding time ($t_1$) stored in the X memory 81. At the same time, the time evolution circuit 84 calculates the second variable (Yi(tz)) at the target time ($t_2$) for each of the N virtual points, and rewrites the second variable ($y_i(t_1)$) at the immediately preceding time ($t_1$) stored in the Y memory 82.

The control circuit 85 sequentially updates the target time (tz) every unit time ($\Delta t$) to cause the action arithmetic circuit 83 and the time evolution circuit 84 to sequentially calculate the first variable (x;(t)) and the second variable ($y_i(t)$) every unit time ($\Delta t$).

The control circuit 85 generates an index (i) for identifying N virtual points by incrementing from 1 to N for each unit time. The control circuit 85 gives the index (i) to the action arithmetic circuit 83 and the time evolution circuit 84, and causes them to calculate the first variable ($x_i(t_2)$) at the target time ($t_2$) and the second variable ($y_i(t_2)$) at the target time (tz) corresponding to each of the N virtual points in the index order. Note that the action arithmetic circuit 83 and the time evolution circuit 84 may calculate a plurality of first variables ($x_i(t_2)$) and a plurality of second variables ($y_i(t_2)$) corresponding to a plurality of indexes in parallel.

FIG. 13 is a diagram illustrating a configuration of the action arithmetic circuit 83. The action arithmetic circuit 83 includes the first weight memory 51, the second weight memory 52, a matrix arithmetic circuit 91, a first addition circuit 93, an $\alpha$ function circuit 94, and a second addition circuit 96.

The first weight memory 51 includes a first J memory 101 and a first h memory 103. The second weight memory 52 includes a second J memory 102 and a second h memory 104.

The first J memory 101 stores a first matrix (J1) including (N$\times$N) first weight values. The second J memory 102 stores a second matrix (J2) including (N$\times$N) second weight values.

$J1_{i,j}$ represents a first weight value of the i-th row and the j-th column included in the first matrix. $J2_{i,j}$ represents a second weight value of the i-th row and the j-th column included in the second matrix. A value obtained by adding $J1_{i,j}$ and $J2_{i,j}$ is a weight value of the i-th row j-th column of the matrix (J) in the Ising model. The matrix (J) in the Ising model is a matrix obtained by performing matrix addition on the first matrix (J1) and the second matrix (J2).

The first h memory 103 stores the first array (h1) including N first weight values. The second h memory 104 stores the second matrix (h2) including N second weight values.

$h1_i$ represents the i-th first weight value included in the first array. h2; represents the i-th second weight value included in the second array. The value obtained by adding $h1_i$ and h2; is the i-th weight value of the array (h) including the bias coefficient in the Ising model.

Prior to the operation, the setting circuit 74 receives the first matrix (J1) and the first array (h1) generated by the first update unit 41. Then, the setting circuit 74 writes the first matrix (J1) into the first J memory 101 and writes the first array (h1) into the first h memory 103. Prior to the operation, the setting circuit 74 receives the second matrix (J2) and the second array (h2) generated by the second update unit 42. Then, the setting circuit 74 writes the second matrix (J2) to the second J memory 102 and writes the second array (h2) to the second h memory 104.

The matrix arithmetic circuit 91 acquires N first variables ($x_j(t_1)$) at the immediately preceding time ($t_1$) from the X memory 81. The matrix arithmetic circuit 91 acquires, for each of the N virtual points, N first weight values ($J1_{i,j}$) and N second weight values ($J2_{i,j}$) included in the target row from the first J memory 101 and the second J memory 102. Then, the matrix arithmetic circuit 91 executes, for each of the N virtual points, a product-sum operation on the N first variables ($x_j(t_1)$) at the immediately preceding time ($t_1$) and the N weight values ($J_{i,j}$) included in the target row in the matrix (J).

For each of the N virtual points, the first addition circuit 93 acquires a corresponding first weight value ($h1_i$) among the N first weight values included in the first array (h1) from the first h memory 103, and acquires a corresponding second weight value (h2;) among the N second weight values included in the second array (h2) from the second h memory 104. Then, the first addition circuit 93 adds the acquired first weight value ($h1_i$) and the acquired second weight value (h2;) for each of the N virtual points to calculate a target bias coefficient ($h_i$).

The $\alpha$ function circuit 94 acquires the target bias coefficient ($h_i$) from the first addition circuit 93 for each of the N virtual points. The $\alpha$ function circuit 94 executes an operation of {$-h_i\alpha$ (ti)} for each of the N virtual points. $\alpha(t)$ is a preset function.

For each of the N virtual points, the second addition circuit 96 adds a value representing the operation result by the matrix arithmetic circuit 91 and a value representing the operation result by the $\alpha$ function circuit 94. By this operation, the second addition circuit 96 outputs the update value (zi(ti)) at the immediately preceding time ($t_1$) represented by Expression (8) for each of the N virtual points.

$$z_i(t_1) = -h_i\alpha(t_1) - \sum_{j=1}^{N} J_{i,j}x_j(t_1) \quad \cdots (8)$$

FIG. 14 is a diagram illustrating a configuration of the matrix arithmetic circuit 91 according to the third embodiment together with the first J memory 101, the second J memory 102, and the X memory 81.

The first J memory 101 stores the first matrix (J1). Each time a clock is given, the first J memory 101 outputs one first weight value ($J1_{i,j}$) among the N×N first weight values included in the first matrix (J1). The first J memory 101 outputs N first weight values in the row designated by the index (i). The index (i) is a value designating any of the N virtual points. The index (i) is repeatedly incremented by a value from 1 to N, and is updated every N clocks. Therefore, the first J memory 101 raster-scans the N×N first weight values included in the first matrix (J1) to output the first weight value ($J1_{i,j}$) for each clock. The first J memory 101 sequentially outputs the N first weight values {$J1_{1,1}$, $J1_{1,2}$,..., $J1_{1,N}$} in the first row from the first column to the N-th column, and subsequently sequentially outputs the N first weight values {$J1_{2,1}$, $J1_{2,2}$,..., $J1_{2,N}$} in the second row from the first column to the N-th column. Thereafter, the first J memory 101 similarly outputs N first weight values in each row up to the N-th row. Then, after outputting the first weight value ($J1_{N,N}$) of the N-th row and the N-th column, the first J memory 101 returns to the first row and repeats the processing in a similar manner.

The second J memory 102 stores the second matrix (J2). Every time a clock is given, the second J memory 102 outputs one second weight value ($J2_{i,j}$) among the N×N second weight values included in the second matrix (J2). The second J memory 102 outputs N second weight values in the row designated by the index (i). Therefore, the second J memory 102 raster-scans the N×N second weight values included in the second matrix (J2) to output the second weight value ($J2_{i,j}$) for each clock. The second J memory 102 sequentially outputs the N second weight values {$J2_{1,1}$, $J2_{1,2}$,..., $J2_{1,N}$} in the first row from the first column to the N-th column, and subsequently sequentially outputs the N second weight values {$J2_{2,1}$, $J2_{2,2}$,..., $J2_{2,N}$} in the second row from the first column to the N-th column. Thereafter, the second J memory 102 similarly outputs N second weight values in each of the rows up to the N-th row. Then, after outputting the second weight value ($J2_{N,N}$) of the N-th row and the N-th column, the second J memory 102 returns to the first row and repeats the processing in a similar manner.

The X memory 81 stores N first variables ($x_j(t_1)$) at the immediately preceding time (an example of N first intermediate variables at first time). The X memory 81 outputs N first variables ($x_j(t_1)$) in order from the first first variable ($x_1$ $(t_1)$) to the N-th first variable ($x_N$ $(t_1)$) for each clock. After outputting the N-th first variable ($x_j(t_1)$), the X memory 81 outputs the first first variable ($x_N$ $(t_1)$) in the next clock. The X memory 81 outputs the first first variable ($x_N$ $(t_1)$) in the clock in which the index (i) is updated.

The matrix arithmetic circuit 91 according to the third embodiment includes a first weight addition circuit 113, a first multiplication circuit 115, and a first cumulative addition circuit 116.

For each clock, the first weight addition circuit 113 outputs a weight value ($J_{i,j}$) obtained by adding the first weight value ($J1_{i,j}$) output from the first J memory 101 and the second weight value ($J2_{i,j}$) output from the second J memory 102. As a result, the first weight addition circuit 113 can output the same value as the weight value ($J_{i,j}$) read by raster-scanning the matrix (J) including N×N weight values for each clock. As a result, the first weight addition circuit 113 can calculate the matrix (J) by performing matrix addition on the first matrix (J1) and the second matrix (J2).

The first multiplication circuit 115 outputs a multiplication value obtained by multiplying the weight value ($J_{i,j}$) output from the first weight addition circuit 113 by the first variable ($x_j(t_1)$) output from the X memory 81 for each clock.

The first cumulative addition circuit 116 includes an adder 121, a reset selector 122, and a latch circuit 123. The adder 121 adds the multiplication value output from the first multiplication circuit 115 to the value stored in the latch circuit 123. The reset selector 122 gives the value output from the adder 121 to the latch circuit 123. The reset selector 122 gives 0 to the latch circuit 123 instead of the value output from the adder 121 every N clocks, namely, in synchronization with the update of the index (i). The latch circuit 123 fetches and stores the value output from the reset selector 122 for each clock.

Such a first cumulative addition circuit 116 calculates a product-sum operation value obtained by cumulatively adding the multiplication values output from the first multiplication circuit 115 for each clock. The first cumulative addition circuit 116 resets the product-sum operation value to 0 every N clocks, namely, in synchronization with the update of the index (i). In addition, the first cumulative addition circuit 116 outputs the product-sum operation value in a cycle immediately before resetting the product-sum operation value to 0. As a result, the first cumulative addition circuit 116 can output, every N clocks, a product-sum operation value obtained by performing a product-sum operation on the N weight values included in the row corresponding to the index (i) in the matrix (J) and the N first variables ($x_j(t_1)$).

As described above, the matrix arithmetic circuit 91 according to the third embodiment performs matrix addition on the first matrix (J1) and the second matrix (J2) to calculate the matrix (J). Then, the matrix arithmetic circuit 91 executes matrix multiplication of the N first variables ($x_j(t_1)$) at the immediately preceding time and the matrix (J), thereby calculating the N product-sum operation values ($z'_i(t_1)$) (an example of the N second intermediate variables) at the immediately preceding time represented by Expression (9).

$$z'_i(t_1) = \sum_{j=1}^{N} J_{i,j} x_j(t_1) \qquad \cdots (9)$$

As described above, the matrix arithmetic circuit 91 according to the third embodiment can execute the product-sum operation on the matrix (J) obtained by adding the first matrix (J1) that is a plurality of first weight values and the second matrix (J2) that is a plurality of second weight values, and the N first variables ($x_j(t_1)$).

## Fourth Embodiment

Next, a market system 10 according to the fourth embodiment will be described. The market system 10 according to the fourth embodiment is the same as that of the third embodiment except for the matrix arithmetic circuit 91. Hereinafter, the matrix arithmetic circuit 91 according to the fourth embodiment will be described, and detailed description of the same configuration as that of the third embodiment will be omitted.

FIG. 15 is a diagram illustrating a configuration of the matrix arithmetic circuit 91 according to the fourth embodiment together with the first J memory 101, the second J memory 102, and the X memory 81.

The matrix arithmetic circuit 91 according to the fourth embodiment includes a second multiplication circuit 131, a third multiplication circuit 132, a second cumulative addition circuit 133, a third cumulative addition circuit 134, and a first output addition circuit 135.

The second multiplication circuit 131 multiplies the first weight value ($J1_{i,j}$) output from the first J memory 101 by the first variable ($x_j(t_1)$) at the immediately preceding time output from the X memory 81 for each clock to output the first multiplication value. The third multiplication circuit 132 multiplies the second weight value ($J2_{i,j}$) output from the second J memory 102 by the first variable ($x_j(t_1)$) at the immediately preceding time output from the X memory 81 for each clock to output the second multiplication value.

The second cumulative addition circuit 133 has the same configuration as the first cumulative addition circuit 116 according to the third embodiment. The second cumulative addition circuit 133 calculates, for each clock, a first product-sum operation value obtained by cumulatively adding the first multiplication values output from the second multiplication circuit 131. The second cumulative addition circuit 133 resets the first product-sum operation value to 0 every N clocks, namely, in synchronization with the update of the index (i). The second cumulative addition circuit 133 outputs the first product-sum operation value in a cycle immediately before resetting the first product-sum operation value to 0. As a result, the second cumulative addition circuit 133 can generate, every N clocks, the first product-sum operation value obtained by performing the product-sum operation on the N first weight values included in the row corresponding to the index (i) in the first matrix (J1) and the N first variables ($x_j(t_1)$) at the immediately preceding time.

The third cumulative addition circuit 134 has the same configuration as the first cumulative addition circuit 116 according to the third embodiment. The third cumulative addition circuit 134 calculates, for each clock, a second product-sum operation value obtained by cumulatively adding the second multiplication values output from the third multiplication circuit 132. The third cumulative addition circuit 134 resets the second product-sum operation value to 0 every N clocks, namely, in synchronization with the update of the index (i). The third cumulative addition circuit 134 outputs the second product-sum operation value in a cycle immediately before resetting the second product-sum operation value to 0. As a result, the third cumulative addition circuit 134 can generate, every N clocks, the second product-sum operation value obtained by performing the product-sum operation on the N second weight values included in the row corresponding to the index (i) in the second matrix (J2) and the N first variables ($x_j(t_1)$) at the immediately preceding time.

The first output addition circuit 135 adds the first cumulative addition value in the cycle immediately before the second cumulative addition circuit 133 resets the first cumulative addition value to 0 to the second cumulative addition value in the cycle immediately before the third cumulative addition circuit 134 resets the second cumulative addition value to 0. The first output addition circuit 135 outputs a value obtained by adding the first cumulative addition value to the second cumulative addition value as a product-sum operation value ($z'_i(t_1)$) every N clocks, namely, in synchronization with the update of the index (i).

As described above, the matrix arithmetic circuit 91 according to the fourth embodiment executes matrix multiplication of the N first variables ($x_j(t_1)$) at the immediately preceding time and the first matrix (J1), and generates N first product-sum operation values. The matrix arithmetic circuit 91 executes matrix multiplication of the N first variables ($x_j(t_1)$) at the immediately preceding time and the second matrix (J2) to generate N second product-sum operation values. Then, the matrix arithmetic circuit 91 performs matrix addition on the N first product-sum operation values and the N second product-sum operation values, thereby calculating N product-sum operation values ($z'_i(t_1)$) at the immediately preceding time represented by Expression (9).

As described above, the matrix arithmetic circuit 91 according to the fourth embodiment can execute the product-sum operation on the matrix (J) obtained by adding the first matrix (J1) that is a plurality of first weight values to the second matrix (J2) that is a plurality of second weight values, and the N first variables ($x_j(t_1)$) at the immediately preceding time.

## Fifth Embodiment

Next, a market system 10 according to the fifth embodiment will be described. The market system 10 according to the fifth embodiment is the same as that of the third embodiment except for the matrix arithmetic circuit 91, the first J memory 101, and the second J memory 102. Hereinafter, the matrix arithmetic circuit 91 according to the fifth embodiment will be described, and detailed description of the same configuration as that of the third embodiment will be omitted.

FIG. 16 is a diagram illustrating a configuration of the matrix arithmetic circuit 91 according to the fifth embodiment together with the first J memory 101, the second J memory 102, and the X memory 81.

The first J memory 101 according to the fifth embodiment includes N first row memories 141-1 to 141-N. Among the N first row memories 141-1 to 141-N, the i-th first row memory 141-i stores the N first weight values $\{J1_{i,1}, J1_{1,2},..., J1_{i,N}\}$ of the i-th row of the first matrix (J1). Each of the N first row memories 141-1 to 141-N outputs the N first weight values one by one for each clock from the first weight value ($J1_{i,1}$) in the first column to the first weight value ($J1_{i,N}$) in the N-th column in order.

The second J memory 102 according to the fifth embodiment includes N second row memories 142-1 to 142-N. Among the N second row memories 142-1 to 142-N, the i-th second row memory 142-i stores the N second weight values $\{J2_{i,1}, J2_{i,2},..., J2_{i,N}\}$ of the i-th row of the second matrix (J2). Each of the N second row memories 142-1 to 142-N outputs N second weight values one by one for each clock from the second weight value (J2i,i) in the first column to the second weight value ($J2_{i,N}$) in the N-th column in order.

The X memory 81 according to the fifth embodiment outputs N first variables ($x_j(t_1)$) at the immediately preceding time in parallel.

The matrix arithmetic circuit 91 according to the fifth embodiment includes N second weight addition circuits 143-1 to 143-N, N fourth multiplication circuits 144-1 to 144-N, and a first summing circuit 145.

The N second weight addition circuits 143-1 to 143-N correspond to the N rows on a one-to-one basis. Among the N second weight addition circuits 143-1 to 143-N, the i-th second weight addition circuit 143-i corresponds to the i-th row among the N rows. The i-th second weight addition circuit 143-i acquires N first weight values $\{J1_{i,1}, J1_{1,2},..., J1_{i,N}\}$ in the i-th row stored in the i-th first row memory 141-i among the N first row memories 141-1 to 141-N one by one for each clock. In addition, the i-th second weight addition circuit 143-i acquires N second weight values $\{J2_{i,1}, J2_{i,2},..., J2_{i,N}\}$ of the i-th row stored in the i-th second row memory 142-i among the N second row memories 142-1 to 142-N one by one for each clock. For each clock, the i-th second weight addition circuit 143-i outputs a weight value ($J_{i,j}$) of the i-th row of the matrix (J) obtained by adding the acquired first weight value ($J1_{i,j}$) of the i-th row of the first matrix (J1) to the acquired second weight value ($J2_{i,j}$) of the i-th row of the second matrix (J2). Such N second weight addition circuits 143-1 to 143-N can generate N weight values for each of the N columns in the matrix (J) by executing a process of performing matrix addition on the column in the first matrix (J1) and the column in the second matrix (J2) by one column for each of the N columns.

The N fourth multiplication circuits 144-1 to 144-N have one-to-one correspondence with the N rows. The i-th fourth multiplication circuit 144-i among the N fourth multiplication circuits 144-1 to 144-N corresponds to the i-th row among the N rows. The i-th fourth multiplication circuit 144-i acquires the weight value ($J_{i,j}$) of the i-th row in the matrix (J) from the i-th second weight addition circuit 143-i for each clock. In addition, the i-th fourth multiplication circuit 144-i continues N clocks and acquires the i-th first variable ($x_i(t_1)$) among the N first variables ($x_j(t_1)$) at the immediately preceding time output from the X memory 81. The i-th fourth multiplication circuit 144-i outputs an i-th multiplication value obtained by multiplying the weight value ($J_{i,j}$) of the i-th row in the matrix (J) by the i-th first variable ($x_i(t_1)$) for each clock. Such N fourth multiplication circuits 144-1 to 144-N can generate N multiplication values for each of the N columns in the matrix (J) by multiplying the i-th weight value ($J_{i,j}$) among the N weight values by the i-th first variable ($x_j(t_1)$) among the N first variables ($x_j(t_1)$) at the immediately preceding time, for each of the N columns.

The first summing circuit 145 acquires N multiplication values output from the N fourth multiplication circuits 144-1 to 144-N for each clock. The first summing circuit 145 adds all the N multiplication values for each clock. For each clock, the first summing circuit 145 outputs the added value as a product-sum operation value ($z'_i(t_1)$) obtained by performing a product-sum operation on the N weight values included in the column corresponding to the index (i) in the matrix (J) and the N first variables ($x_j(t_1)$).

As described above, the matrix arithmetic circuit 91 according to the fifth embodiment executes the process of performing matrix addition on the column in the first matrix (J1) and the column in the second matrix (J2) by one column for each of the N columns, thereby generating N weight values for each of the N columns. Subsequently, for each of the N columns, the matrix arithmetic circuit 91 multiplies the i-th weight value ($J_{i,j}$) among the N weight values by the i-th first variable ($x_j(t_1)$) among the N first variables ($x_j(t_1)$) at the immediately preceding time, thereby generating N multiplication values for each of the N columns. Then, the matrix arithmetic circuit 91 calculates N product-sum operation values ($z'_i(t_1)$) at the immediately preceding time represented by Expression (9) by summing the N multiplication values for each of the N columns.

The matrix arithmetic circuit 91 according to the fifth embodiment can execute a product-sum operation on a matrix (J) obtained by adding a first matrix (J1) that is a plurality of first weight values to a second matrix (J2) that is a plurality of second weight values to N first variables ($x_j(t_1)$) in parallel for N rows.

Sixth Embodiment

Next, the market system 10 according to a sixth embodiment will be described. The market system 10 according to the sixth embodiment is the same as that of the fifth embodiment except for the matrix arithmetic circuit 91. Hereinafter, the matrix arithmetic circuit 91 according to the sixth embodiment will be described, and detailed description of the same configuration as that of the fifth embodiment will be omitted.

FIG. 17 is a diagram illustrating a configuration of the matrix arithmetic circuit 91 according to the sixth embodiment together with the first J memory 101, the second J memory 102, and the X memory 81.

The matrix arithmetic circuit 91 according to the sixth embodiment includes N fifth multiplication circuits 151-1 to 151-N, N sixth multiplication circuits 152-1 to 152-N, a second summing circuit 153, a third summing circuit 154, and a second output addition circuit 155.

The N fifth multiplication circuits 151-1 to 151-N have one-to-one correspondence with the N rows. Among the N fifth multiplication circuits 151-1 to 151-N, the i-th fifth multiplication circuit 151-i corresponds to the i-th row among the N rows. The i-th fifth multiplication circuit 151-i acquires N first weight values $\{J1_{i,1}, J1_{i,2},..., J1_{i,N}\}$ of the i-th row stored in the i-th first row memory 141-i among the N first row memories 141-1 to 141-N one by one for each clock. In addition, the i-th fifth multiplication circuit 151-i continues N clocks and acquires the i-th first variable ($x_i(t_1)$) among the N first variables ($x_j(t_1)$) at the immediately preceding time output from the X memory 81. The i-th fifth multiplication circuit 151-i outputs the i-th first multiplication value obtained by multiplying the first weight value ($J1_{i,j}$) of the i-th row in the first matrix (J1) by the i-th first variable (xi(ti)) for each clock. Such N fifth multiplication circuits 151-1 to 151-N can calculate N first multiplication values for each of the N columns by multiplying the i-th first weight value ($J1_{i,j}$) among the N first weight values included in the first matrix (J1) by the i-th first variable ($x_j(t_1)$) among the N first variables ($x_j(t_1)$) at the immediately preceding time, for each of the N columns.

The N sixth multiplication circuits 152-1 to 152-N have one-to-one correspondence with the N rows. Among the N sixth multiplication circuits 152-1 to 152-N, the i-th sixth multiplication circuit 152-i corresponds to the i-th row among the N rows. The i-th sixth multiplication circuit 152-i acquires N second weight values $\{J2_{i,1}, J2_{i,2},..., J2_{i,N}\}$ in the i-th row stored in the i-th second row memory 142-i among the N second row memories 142-1 to 142-N one by one for each clock. In addition, the i-th sixth multiplication circuit 152-i continues N clocks and acquires the i-th first variable ($x_i(t_1)$) among the N first variables ($x_j(t_1)$) at the immediately preceding time output from the X memory 81. The i-th sixth multiplication circuit 152-i outputs the i-th second multiplication value obtained by multiplying the i-th row second weight value ($J2_{i,j}$) in the second matrix (J2) by the i-th first variable ($x_i(t_1)$) for each clock. Such N sixth multiplication circuits 152-1 to 152-N can calculate N second multiplication values for each of the N columns by multiplying the i-th second weight value ($J2_{i,j}$) among the N second weight values included in the second matrix (J2) by the i-th first variable ($x_j(t_1)$) among the N first variables ($x_j(t_1)$) at the immediately preceding time, for each of the N columns.

The second summing circuit 153 acquires N first multiplication values output from the N fifth multiplication circuits 151-1 to 151-N for each clock. The second summing circuit 153 adds all the N first multiplication values for each clock. For each clock, the second summing circuit 153 outputs the added value as a first product-sum operation value obtained by performing a product-sum operation on the N first weight values included in the column corresponding to the index (i) in the first matrix (J1) and the N first variables ($x_j(t_1)$).

The third summing circuit 154 acquires N second multiplication values output from the N sixth multiplication circuits 152-1 to 152-N for each clock. The third summing circuit 154 adds all the N second multiplication values for each clock. For each clock, the third summing circuit 154 outputs the added value as a second product-sum operation value obtained by performing a product-sum operation on the N second weight values included in the column corresponding to the index (i) in the second matrix (J2) and the N first variables ($x_j(t_1)$).

The second output addition circuit 155 acquires the first product-sum operation value from the second summing circuit 153 and acquires the second product-sum operation value from the third summing circuit 154 for each clock. The second output addition circuit 155 adds the first product-sum operation value to the second product-sum operation value for each clock. Then, the second output addition circuit 155 outputs the added value as a product-sum operation value ($z'_i(t_1)$) obtained by performing a product-sum operation on the N weight values included in the row corresponding to the index (i) in the matrix (J) and the N first variables ($x_j(t_1)$).

As described above, the matrix arithmetic circuit 91 according to the sixth embodiment calculates N first multiplication values by multiplying the i-th first weight value ($J1_{i,j}$) among the N first weight values included in the first matrix (J1) by the i-th first variable ($x_j(t_1)$) among the N first variables ($x_j(t_1)$) at the immediately preceding time, for each of the N columns. The matrix arithmetic circuit 91 calculates N second multiplication values by multiplying the second weight value ($J2_{i,j}$) of the N second weight values included in the second matrix (J2) by the i-th first variable ($x_j(t_1)$), for each of the N columns. Subsequently, the matrix arithmetic circuit 91 calculates a first product-sum operation value obtained by adding all the N first multiplication values for each of the N columns. The matrix arithmetic circuit 91 calculates a second product-sum operation value obtained by adding all the N second multiplication values for each of the N columns. Then, the matrix arithmetic circuit 91 calculates N product-sum operation values ($z'_i(t_1)$) at the immediately preceding time by adding the first product-sum operation value to the second product-sum operation value for each of the N columns.

The matrix arithmetic circuit 91 according to the sixth embodiment can execute a product-sum operation on a matrix (J) obtained by adding a first matrix (J1) that is a plurality of first weight values to a second matrix (J2) that is a plurality of second weight values to N first variables ($x_j(t_1)$) in parallel for N rows.

## Seventh Embodiment

Next, the market system 10 according to the seventh embodiment will be described. The market system 10 according to the seventh embodiment is the same as that of the third embodiment except for the matrix arithmetic circuit 91, the first J memory 101, and the second J memory 102. Hereinafter, the matrix arithmetic circuit 91 according to the seventh embodiment will be described, and detailed description of the same configuration as that of the third embodiment will be omitted.

FIG. 18 is a diagram illustrating a configuration of the matrix arithmetic circuit 91 according to the seventh embodiment together with the first J memory 101, the second J memory 102, and the X memory 81.

The first J memory 101 according to the seventh embodiment includes N first column memories 161-1 to 161-N. The i-th first column memory 161-i -1 among the N first column memories 161 to 161-N stores the N first weight values $\{J1_{1,i}, J1_{2,i},..., J1_{N,i}\}$ of the i-th column of the first matrix (J1). Each of the N first column memories 161-1 to 161-N outputs N first weight values one by one for each clock from the first weight value ($J1_{1,i}$) in the first row to the first weight value ($J1_{N,i}$) in the N-th row in order.

The second J memory 102 according to the seventh embodiment includes N second column memories 162-1 to 162-N. The i-th second column memory 162-i -1 among the N second column memories 162 to 162-N stores the N second weight values $\{J2_{1,1}, J2_{2,i},..., J2_{N,i}\}$ of the i-th column of the second matrix (J2). Each of the N second column memories 162-1 to 162-N outputs N second weight values one by one from the second weight value ($J2_{i,j}$) in the first row to the second weight value ($J2_{N,i}$) in the N-th row for each clock.

The matrix arithmetic circuit 91 according to the seventh embodiment includes N third weight addition circuits 163-1 to 163-N, N seventh multiplication circuits 164-1 to 164-N, and N fourth cumulative addition circuits 165-1 to 165-N.

The N third weight addition circuits 163-1 to 163-N correspond to the N columns on a one-to-one basis. Among the N third weight addition circuits 163-1 to 163-N, the i-th third weight addition circuit 163-i corresponds to the i-th column among the N columns. The i-th third weight addition circuit 163-i acquires N first weight values $\{J1_{1,i}, J1_{2,i},..., J1_{N,i}\}$ of the i-th column stored in the i-th first column memory 161-i among the N first column memories 161-1 to 161-N one by one for each clock. In addition, the i-th third weight addition circuit 163-i acquires N second weight values $\{J2_{1,1}, J2_{2,i},..., J2_{N,i}\}$ of the i-th column stored in the i-th second column memory 162-i among the N second column memories 162-1 to 162-N one by one for each clock. The i-th third weight addition circuit 163-i outputs, for each clock, a weight value ($J_{j,i}$) obtained by adding the acquired first weight value ($J1_{j,i}$) of the i-th column of the first matrix (J1) to the acquired second weight value ($J2_{j,i}$) of the i-th column of the second matrix (J2). Such N third weight addition circuits 163-1 to 163-N can generate N weight values for each of the N rows by executing a process of performing matrix addition on the row in the first matrix (J1) and the row in the second matrix (J2) by one row for each of the N rows.

The N seventh multiplication circuits 164-1 to 164-N correspond to the N columns on a one-to-one basis. The i-th seventh multiplication circuit 164-i among the N seventh multiplication circuits 164-1 to 164-N corresponds to the i-th column among the N columns. The i-th seventh multiplication circuit 164-i acquires the weight value ($J_{j,i}$) of the i-th column in the matrix (J) from the i-th third weight addition circuit 163-i for each clock. The i-th seventh multiplication circuit 164-i acquires the first variable ($x_j(t_1)$) at the immediately preceding time output from the X memory 81 for each clock. The first variable ($x_j(t_1)$) at the immediately preceding time output from the X memory 81 is updated for each clock. The i-th seventh multiplication circuit 164-i outputs, for each clock, a multiplication value obtained by multiplying the weight value ($J_{j,i}$) of the i-th column in the matrix (J) by the first variable ($x_i(t_1)$). Such N seventh multiplication circuits 164-1 to 164-N can generate N multiplication values for each of the N rows by multiplying the i-th weight value ($J_{j,i}$) among the N weight values by the i-th first variable ($x_j(t_1)$) among the N first variables ($x_j(t_1)$) at the immediately preceding time for each of the N rows.

Each of the N fourth cumulative addition circuits 165-1 to 165-N has the same configuration as the first cumulative addition circuit 116 according to the third embodiment. The N fourth cumulative addition circuits 165-1 to 165-N correspond to the N columns on a one-to-one basis. The i-th fourth cumulative addition circuit 165-i among the N fourth cumulative addition circuits 165-1 to 165-N corresponds to the i-th column among the N columns. The i-th fourth cumulative addition circuit 165-i calculates, for each clock, a product-sum operation value obtained by cumulatively adding the multiplication values output from the i-th seventh multiplication circuit 164-i. Each of the N fourth cumulative addition circuits 165-1 to 165-N resets the product-sum operation value to 0 every N clocks. Each of the N fourth cumulative addition circuits 165-1 to 165-N outputs the product-sum operation value in the cycle immediately before resetting the product-sum operation value to 0. As a result, the N fourth cumulative addition circuits 165-1 to 165-N can output, for each of the N columns, a product-sum operation value obtained by cumulatively adding the N multiplication values by N clocks, as a product-sum operation value ($z'_i(t_1)$) of the N weight values included in the column corresponding to the index (i) in the matrix (J) and the N first variables ($x_j(t_1)$).

As described above, the matrix arithmetic circuit 91 according to the seventh embodiment executes the process of performing matrix addition on the row in the first matrix (J1) and the row in the second matrix (J2) by one row for each of the N rows, thereby generating N weight values for each of the N rows. Subsequently, the matrix arithmetic circuit 91 generates N multiplication values by multiplying the i-th weight value ($J_{i,j}$) among the N weight values for each of the N rows by the i-th first variable ($x_j(t_1)$) among the N first variables ($x_j(t_1)$) at the immediately preceding time. Then, the matrix arithmetic circuit 91 calculates N product-sum operation values ($z'_i(t_1)$) at the immediately preceding time by cumulatively adding the N multiplication values for each of the N columns.

The matrix arithmetic circuit 91 according to the seventh embodiment can execute a product-sum operation on a matrix (J) obtained by adding a first matrix (J1) that is a plurality of first weight values to a second matrix (J2) that is a plurality of second weight values to N first variables ($x_j(t_1)$) in parallel for N columns.

## Eighth Embodiment

Next, the market system 10 according to the eighth embodiment will be described. The market system 10 according to the eighth embodiment is the same as that of the seventh embodiment except for the matrix arithmetic circuit 91. Hereinafter, a matrix arithmetic circuit 91 according to the eighth embodiment will be described, and detailed description of the same configuration as that of the seventh embodiment will be omitted.

FIG. 19 is a diagram illustrating a configuration of the matrix arithmetic circuit 91 according to the eighth embodiment together with the first J memory 101, the second J memory 102, and the X memory 81.

The matrix arithmetic circuit 91 according to the eighth embodiment includes N eighth multiplication circuits 171-1 to 171-N, N ninth multiplication circuits 172-1 to 172-N, N fifth cumulative addition circuits 173-1 to 173-N, N sixth cumulative addition circuits 174-1 to 174-N, and N third output addition circuits 175-1 to 175-N.

The N eighth multiplication circuits 171-1 to 171-N correspond to the N columns on a one-to-one basis. Among the N eighth multiplication circuits 171-1 to 171-N, the i-th eighth multiplication circuit 171-i corresponds to the i-th column among the N columns. The i-th eighth multiplication circuit 171-i acquires N first weight values $\{J1_{1,i}, J1_{2,i},..., J1_{N,i}\}$ of the i-th column stored in the i-th first column memory 161-i among the N first column memories 161-1 to 161-N one by one for each clock. The i-th eighth multiplication circuit 171-i acquires the first variable ($x_j(t_1)$) at the immediately preceding time output from the X memory 81 for each clock. The first variable ($x_j(t_1)$) at the immediately preceding time output from the X memory 81 is updated for each clock. The i-th eighth multiplication circuit 171-i outputs a first multiplication value obtained by multiplying the first weight value ($J1_{j,i}$) of the i-th column in the first matrix (J1) by the first variable ($x_i(t_1)$) for each clock. Such N eighth multiplication circuits 171-1 to 171-N can calculate the N first multiplication values by multiplying the i-th first weight value ($J1_{j,i}$) among the N first weight values included in the first matrix (J1) by the i-th first variable ($x_j(t_1)$) among the N first variables ($x_j(t_1)$) at the immediately preceding time for each of the N rows.

The N ninth multiplication circuits 172-1 to 172-N correspond to the N columns on a one-to-one basis. Among the N ninth multiplication circuits 172-1 to 172-N, the i-th ninth multiplication circuit 172-i corresponds to the i-th column among the N columns. The i-th ninth multiplication circuit 172-i acquires N second weight values $\{J2_{1,i}, J2_{2,i},..., J2_{N,i}\}$ of the i-th column stored in the i-th second column memory 162-i among the N second column memories 162-1 to 162-N one by one for each clock. The i-th ninth multiplication circuit 172-i acquires the first variable ($x_j(t_1)$) at the immediately preceding time output from the X memory 81 for each clock. The i-th ninth multiplication circuit 172-i outputs, for each clock, a second multiplication value obtained by multiplying the second weight value ($J2_{j,i}$) of the i-th column in the second matrix (J2) by the first variable ($x_i(t_1)$). Such N ninth multiplication circuits 172-1 to 172-N can calculate the N second multiplication values by multiplying the i-th second weight value ($J2_{j,i}$) among the N second weight values included in the second matrix (J2) by the i-th first variable ($x_j(t_1)$) among the N first variables ($x_j(t_1)$) at the immediately preceding time for each of the N rows.

Each of the N fifth cumulative addition circuits 173-1 to 173-N has the same configuration as the first cumulative addition circuit 116 according to the third embodiment. The N fifth cumulative addition circuits 173-1 to 173-N correspond to the N columns on a one-to-one basis. The i-th fifth cumulative addition circuit 173-i among the N fifth cumulative addition circuits 173-1 to 173-N corresponds to the i-th column among the N columns. The i-th fifth cumulative addition circuit 173-i calculates, for each clock, a first product-sum operation value obtained by cumulatively adding the first multiplication values output from the i-th eighth multiplication circuit 171-i. Each of the N fifth cumulative addition circuits 173-1 to 173-N resets the first product-sum operation value to 0 every N clocks. Each of the N fifth cumulative addition circuits 173-1 to 173-N outputs the first product-sum operation value in the cycle immediately before resetting the first product-sum operation value to 0. The N fifth cumulative addition circuits 173-1 to 173-N can calculate the first product-sum operation value for each of the N columns by cumulatively adding the N first multiplication values for N clocks for each of the N columns.

Each of the N sixth cumulative addition circuits 174-1 to 174-N has the same configuration as the first cumulative addition circuit 116 according to the third embodiment. The N sixth cumulative addition circuits 174-1 to 174-N correspond to the N columns on a one-to-one basis. The i-th sixth cumulative addition circuit 174-i among the N sixth cumulative addition circuits 174-1 to 174-N corresponds to the i-th column among the N columns. The i-th sixth cumulative addition circuit 174-i calculates, for each clock, a second product-sum operation value obtained by cumulatively adding the second multiplication values output from the i-th ninth multiplication circuit 172-i. Each of the N sixth cumulative addition circuits 174-1 to 174-N resets the second product-sum operation value to 0 every N clocks. Each of the N sixth cumulative addition circuits 174-1 to 174-N outputs the second product-sum operation value in the cycle immediately before resetting the second product-sum operation value to 0. The N sixth cumulative addition circuits 174-1 to 174-N can calculate the second product-sum operation value for each of the N columns by cumulatively adding the N second multiplication values for N clocks for each of the N columns.

The N third output addition circuits 175-1 to 175-N correspond to the N columns on a one-to-one basis. Among the N third output addition circuits 175-1 to 175-N, the i-th third output addition circuit 175-i corresponds to the i-th column among the N columns. The i-th third output addition circuit 175-i adds the first cumulative addition value output from the i-th fifth cumulative addition circuit 173-i to the second cumulative addition value from the i-th sixth cumulative addition circuit 174-i every N clocks. As a result, the N third output addition circuits 175-1 to 175-N can output a value obtained by adding the first cumulative addition value to the second cumulative addition value for each of the N columns as a product-sum operation value ($z'_i(t_1)$) obtained by performing a product-sum operation on the N weight values included in the column corresponding to the index (i) in the matrix (J) and the N first variables (Xj(tl)).

As described above, the matrix arithmetic circuit 91 according to the eighth embodiment calculates the N first multiplication values by multiplying the i-th first weight value ($J1_{j,i}$) among the N first weight values included in the first matrix (J1) by the i-th first variable ($x_j(t_1)$) among the N first variables ($x_j(t_1)$) at the immediately preceding time for each of the N rows. The matrix arithmetic circuit 91 calculates N second multiplication values by multiplying the i-th second weight value ($J2_{j,i}$) among the N second weight values included in the second matrix (J2) by the i-th first variable ($x_j(t_1)$) for each of

the N rows. Subsequently, the matrix arithmetic circuit 91 calculates a first cumulative addition value for each of the N columns by cumulatively adding the N first multiplication values for each of the N columns. In addition, the matrix arithmetic circuit 91 calculates the second cumulative addition value for each of the N columns by cumulatively adding the N second multiplication values for each of the N columns. Then, the matrix arithmetic circuit 91 calculates N product-sum operation values ($z'_i(t_1)$) at the immediately preceding time by adding the first cumulative addition value to the second cumulative addition value for each of the N columns.

The matrix arithmetic circuit 91 according to the eighth embodiment can execute a product-sum operation on a matrix (J) obtained by adding a first matrix (J1) that is a plurality of first weight values to a second matrix (J2) that is a plurality of second weight values to N first variables ($x_j(t_1)$) in parallel for N columns.

## Ninth Embodiment

Next, a control system 210 according to the ninth embodiment will be described.

In the first embodiment to the eighth embodiment, an example in which the information processing device 20 is applied to the market system 10 is described. The information processing device 20 is not limited to the market system 10, and can be applied to other systems as long as the system executes a process using the combination optimization problem on data that changes with the lapse of time. For example, the information processing device 20 can also be applied to the control system 210 that controls a movement operation in a moving object.

FIG. 20 is a diagram illustrating an example of a configuration of the control system 210 according to the ninth embodiment. The control system 210 controls, for example, a moving object that autonomously moves, such as an autonomous car, a drone, or a robot.

The control system 210 includes an object detection device 212, an information processing device 20, a control device 214.

The object detection device 212 acquires, for example, image data from a camera that images the surroundings of the moving object to be controlled. The object detection device 212 may acquire sensor data from another sensor device in addition to the image data. The object detection device 212 detects coordinate data representing three-dimensional coordinates for each of one or more of objects around the moving object based on the acquired image data, sensor data, and the like. Moreover, the object detection device 212 may also detect three-dimensional coordinates of the moving object itself to be controlled.

The object detection device 212 irregularly and repeatedly outputs data including identification information for identifying any one of one or more of objects and coordinate data (input information) representing coordinates of the object identified by the identification information to the information processing device 20. Note that the input information may include, in addition to the coordinate data, other related information such as the moving speed, the acceleration, the moving direction, and the type of the object identified by the identification information.

The control device 214 acquires, from the information processing device 20, output data including output information indicating that a predetermined operation is performed on the moving object in order to control the moving object. The control device 214 controls the moving object based on the acquired output data.

Moreover, the output information may indicate that a predetermined operation is performed on any of one or more of objects around the moving object. For example, the output information may include information indicating that information indicating movement control, a predetermined instruction, warning, or the like is given to any of one or more of objects around the moving object. In this case, the output data includes identification information for identifying any object of one or more of objects, and output information. Moreover, in a case where such output data is received, the control device 214 executes a predetermined operation on the object identified by the identification information included in the output data.

The information processing device 20 has a configuration similar to that described in the first to ninth embodiments.

The information processing device 20 generates a combination optimization problem based on the first data and the second data irregularly given from the object detection device 212, and causes the solver device 40 to solve the combination optimization problem. Note that the information processing device 20 may acquire the second data from another sensor device or another data processing device instead of the object detection device 212. Then, the information processing device 20 acquires a solution of the combination optimization problem from the solver device 40, generates output data based on the solution in response to acquiring the solution, and outputs the generated output data to the control device 214 which is an example of the first device.

The information processing device 20 according to the present embodiment can efficiently update the combination optimization problem and cause the solver device 40 to solve the combination optimization problem in a case where the combination optimization problem corresponding to a plurality of types of situations is generated.

Hardware Configuration

FIG. 21 is a diagram illustrating an example of a hardware configuration of the information processing device 20. The partial configuration not including the solver device 40 in the information processing device 20 is realized by a computer having a hardware configuration as illustrated in FIG. 21, for example. The information processing device 20 includes a central processing unit (CPU) 301, a random access memory (RAM) 302, a read only memory (ROM) 303, a storage device 304, and a communication interface device 305. These units are connected by a bus.

The CPU 301 is one or more processors that execute arithmetic process, control process, and the like according to a program. The CPU 301 uses a predetermined region of the RAM 302 for a work region, and executes various processes in cooperation with programs stored in the ROM 303, the storage device 304, and so forth.

The RAM 302 is a memory such as a synchronous dynamic random access memory (SDRAM). The RAM 302 functions as a work region of the CPU 301. The ROM 303 is a memory that stores programs and various types of information in a non-rewritable manner.

The storage device 304 is a device that writes and reads data to and from a semiconductor storage medium such as a flash memory, a magnetically or optically recordable storage medium, or the like. The storage device 304 writes and reads data to and from the storage medium under the control of the CPU 301. The communication interface device 305 communicates with an external device via a network in accordance with control from the CPU 301.

The program executed by the computer causes the computer to function as the information processing device 20. This program is developed on the RAM 302 and executed by the CPU 301 (processor).

In addition, the program executed by the computer is recorded in and provided by a computer-readable recording medium such as a CD-ROM, a flexible disk, a CD-R, or a digital versatile disk (DVD) as a file in a format that can be installed or executed in the computer.

Moreover, the program may be stored on a computer connected to a network such as the Internet and provided by being downloaded via the network. Moreover, the program may be provided or distributed via a network such as the Internet. In addition, the program executed by the information processing device 20 may be provided by being incorporated in the ROM 303 or the like in advance.

The program for causing the computer to function as the information processing device 20 has a module configuration including, for example, a first acquisition module, a second acquisition module, a solver module, a first update module, a second update module, and a process execution module. This program is executed by the CPU 301 to load each module into the RAM 302, and causes the CPU 301 to function as the first acquisition unit 33, the second acquisition unit 34, the solver device 40, the first update unit 41, the second update unit 42, and the process execution unit 46. In a case where the CPU 301 is a plurality of processors, these units may be divided into and carried by a plurality of processors. In addition, this program causes the RAM 302 and the storage device 304 to function as the first input memory 31 and the second input memory 32. Note that some of or all these configurations may be configured by hardware.

Moreover, the solver device 40 may be implemented by one or more reconfigurable semiconductor devices such as a field-programmable gate array (FPGA). Moreover, the solver device 40 may be implemented by an electronic circuit including one or more CPUs, a microprocessor, a graphics processing unit (GPU), an application specific integrated circuit (ASIC), or circuits thereof.

Note that the solver device 40 may be incorporated in the information processing device 20. For example, the solver device 40 may be incorporated as an accelerator in part of the information processing device 20. Moreover, the solver device 40 may include some functions of the information processing device 20, for example, the first update unit 41 and the second update unit 42.

Moreover, in a case where the information processing device 20 is implemented by a reconfigurable semiconductor device such as an FPGA, circuit information (configuration data) written in the reconfigurable semiconductor device to operate the reconfigurable semiconductor device as the information processing device 20 may be stored on a computer connected to a network such as the Internet and provided by being downloaded via the network. In addition, circuit information (configuration data) written in the reconfigurable semiconductor device in order to operate the reconfigurable semiconductor device as the information processing device 20 may be recorded in a computer-readable recording medium and provided.

Moreover, in a case where the information processing device 20 is realized by a semiconductor device such as an ASIC, circuit information representing a configuration of a circuit described in a hardware description language used for designing and manufacturing the information processing device 20 may be stored on a computer connected to a network such as the Internet, and may be provided by being downloaded via a network. Moreover, circuit information representing a configuration of a circuit described in a hardware description language used for designing and manufacturing the information processing device 20 may be provided by being recorded in a computer-readable recording medium.

While certain embodiments have been described, these embodiments have been presented by way of example only, and are not intended to limit the scope of the inventions. Indeed, the novel embodiments described herein may be embodied in a variety of other forms, moreover, various omissions, substitutions, and changes in the form of the embodiments described herein may be made without departing from the spirit of the inventions. The accompanying claims and their equivalents are intended to cover such forms or modifications as would fall within the scope and spirit of the inventions.

Supplement

The above-described embodiments can be summarized in the following technical schemes.

(Technical scheme 1)

An information processing device executing processing on data, the information processing device comprising:

a solver device configured to

store a plurality of first weight values and a plurality of second weight values, and
solve a combination optimization problem minimizing cost function including a plurality of weight values, the plurality of weight values being obtained by combining the plurality of first weight values and the plurality of second weight values; and

an information processing circuit connected to the solver device and configured to

repeatedly acquire first data as the data,
repeatedly acquire second data as the data asynchronously with a timing of acquiring the first data,
update the plurality of first weight values stored in the solver device on the basis of the first data, and
update the plurality of second weight values stored in the solver device on the basis of the second data.

(Technical scheme 2)

The information processing device according to the technical scheme 1, wherein the information processing circuit is configured to,

in updating the plurality of first weight values, update the plurality of first weight values in response to acquiring the first data or in a predetermined first cycle, and,
in updating the plurality of second weight values, update the plurality of second weight values in response to acquiring the second data or in a predetermined second cycle.

(Technical scheme 3)

The information processing device according to the technical scheme 1 or 2, wherein the solver device is configured to start solving the combination optimization problem in response to updating either the plurality of first weight values or the plurality of second weight values.

(Technical scheme 4)

The information processing device according to any one of the technical schemes 1 to 3, wherein the information processing circuit is configured

not to update the plurality of first weight values during solving by the solver device in updating the plurality of first weight values, and
not to update the plurality of second weight values during solving by the solver device in updating the plurality of second weight values.

(Technical scheme 5)

The information processing device according to any one of the technical schemes 1 to 4, wherein the information processing circuit is further configured to

acquire a solution of the combination optimization problem from the solver device, and

execute a process based on the solution in response to acquiring the solution.

(Technical scheme 6)

The information processing device according to the technical scheme 5, wherein the information processing circuit is configured to, in the process based on the solution,

output output data based on the solution, and
stop output of the output data based on the solution in a case where at least one of the new first data and the new second data is acquired during the solving.

(Technical scheme 7)

The information processing device according to any one of the technical schemes 1 to 6, wherein

the cost function is a quadratic function,
each weight value of the plurality of first weight values is a coefficient of a first-order term included in the quadratic function, and
each weight value of the plurality of the second weight values is a coefficient of a second-order term included in the quadratic function.

(Technical scheme 8)

The information processing device according to any one of the technical schemes 1 to 6, wherein

the cost function includes a matrix including N decision variables, where N is an integer of two or more,
the cost function includes weight values of N rows × N columns as the plurality of weight values, and
the cost function is represented by a quadratic function of the N decision variables.

(Technical scheme 9)

The information processing device according to the technical scheme 8, wherein each of the N decision variables included in the cost function is a binary discrete variable.

(Technical scheme 10)

The information processing device according to the technical scheme 9, wherein the combination optimization problem is a quadratic unconstrained binary optimization (QUBO) problem.

(Technical scheme 11)

The information processing device according to the technical scheme 10, wherein the solver device is configured to solve the QUBO problem as an Ising problem that minimizes an Ising model.

(Technical scheme 12)

The information processing device according to the technical scheme 11, wherein the solver device is configured to solve the Ising problem by a simulated bifurcation algorithm.

(Technical scheme 13)

The information processing device according to the technical scheme 7, wherein

the cost function is a cubic or higher function of N decision variables, where N is an integer of two or more, and
the combination optimization problem is a higher order binary optimization (HUBO) problem.

(Technical scheme) 14

The information processing device according to the technical scheme 12, wherein

the solver device includes

a matrix arithmetic circuit configured to calculate N second intermediate variables at a first time by matrix-multiplying N first intermediate variables at the first time and the matrix,
a first circuit configured to calculate N first variables at a second time after the first time and N second variables at the second time on the basis of the N second intermediate variables at the first time,
a control circuit configured to cause the matrix arithmetic circuit and the first circuit to execute processing from a start time to an end time, and
an output circuit configured to generate and output the solution on the basis of the N first variables at the end time,

an i-th spin, where i is an integer of one or more and N or less, among N spins in the Ising model corresponds to an i-th point among N points,
an i-th first variable among the N first variables corresponds to the i-th spin,
an i-th second variable among the N second variables corresponds to the i-th spin,
the i-th first variable represents a position of a point corresponding to the i-th spin,
the i-th second variable represents a momentum of a point corresponding to the i-th spin,
an i-th first intermediate variable among the N first intermediate variables corresponds to the i-th first variable,
the i-th first intermediate variable is a value obtained by multiplying the i-th first variable or the i-th first variable by a preset coefficient, and
an i-th second intermediate variable among the N second intermediate variables corresponds to the i-th second variable.

(Technical scheme 15)

The information processing device according to the technical scheme 14, wherein

the plurality of first weight values includes a first matrix including first weight values of N rows $\times$ N columns,
the plurality of second weight values includes a second matrix including second weight values of N rows $\times$ N columns, and
the matrix is represented by matrix addition of the first matrix and the second matrix.

(Technical scheme 16)

The information processing device according to the technical scheme 15, wherein the matrix arithmetic circuit is configured to

calculate the matrix by performing matrix addition on the first matrix and the second matrix, and
calculate the N second intermediate variables at the first time by executing matrix multiplication of the N first intermediate variables at the first time and the matrix.

(Technical scheme 17)

The information processing device according to the technical scheme 15, wherein the matrix arithmetic circuit is configured to

generate N first product-sum operation values by executing matrix multiplication of the N first intermediate variables at the first time and the first matrix,
generate N second product-sum operation values by executing matrix multiplication of the N first intermediate variables at the first time and the second matrix, and
calculate the N second intermediate variables at the first time by performing matrix addition on the N first product-sum operation values and the N second product-sum operation values.

(Technical scheme 18)

The information processing device according to the technical scheme 15, wherein the matrix arithmetic circuit is configured to

generate N weight values by executing a process of performing matrix addition on a column in the first matrix and a column in the second matrix by one column,
generate N multiplication values by multiplying an i-th weight value among the N weight values by the i-th first intermediate variable, and
calculate the N second intermediate variables at the first time by summing the N multiplication values.

(Technical scheme 19)

The information processing device according to the technical scheme 15, wherein the matrix arithmetic circuit is configured to

calculate N first multiplication values by multiplying an i-th first weight value among N first weight values included in the first matrix by the i-th first intermediate variable,
calculate N second multiplication values by multiplying an i-th second weight value among N second weight values included in the second matrix by the i-th first intermediate variable,
calculate a first product-sum operation value obtained by adding all of the N first multiplication values,
calculate a second product-sum operation value obtained by adding all of the N second multiplication values, and
calculate the N second intermediate variables at the first time by adding the first product-sum operation value to the second product-sum operation value.

(Technical scheme 20)

The information processing device according to the technical scheme 15, wherein the matrix arithmetic circuit is configured to

generate N weight values by executing a process of performing matrix addition on a row in the first matrix and a row in the second matrix by one row,
generate N multiplication values by multiplying an i-th weight value among the N weight values by the i-th first intermediate variable, and
calculate the N second intermediate variables at the first time by cumulatively adding the N multiplication values.

(Technical scheme 21)

The information processing device according to the technical scheme 15, wherein the matrix arithmetic circuit is configured to

calculate N first multiplication values by multiplying an i-th first weight value among the N first weight values included in the first matrix by the i-th first intermediate variable,
calculate N second multiplication values by multiplying the i-th second weight value among the N second weight values included in the second matrix by the i-th first intermediate variable,
calculate a first cumulative addition value by cumulatively adding the N first multiplication values,
calculate a second cumulative addition value by cumulatively adding the N second multiplication values, and
calculate the N second intermediate variables at the first time by adding the first cumulative addition value to the second cumulative addition value.

(Technical scheme 22)

The information processing device according to any one of the technical schemes 1 to 21, wherein

the information processing circuit is configured to, in acquiring the first data, acquire a market state packet as the first data from a market server device serving to perform transactions of a plurality of targets,
the market state packet includes a transaction price for at least one target of the plurality of targets,
a plurality of decision variables included in the cost function in the combination optimization problem correspond to the plurality of targets on a one-to-one basis, and
each decision variable of the plurality of decision variables represents whether to transact a corresponding target among the plurality of targets.

(Technical scheme 23)

The information processing device according to any one of the technical schemes 1 to 21, wherein the first data includes coordinate data representing coordinates of an object.

(Technical scheme 24)

An information processing method implemented by a computer executing processing on data, the computer including a solver device, the method comprising:

causing the solver device to store a plurality of first weight values and a plurality of second weight values;
causing the solver device to solve a combination optimization problem minimizing cost function including a plurality of weight values, the plurality of weight values being obtained by combining the plurality of first weight values and the plurality of second weight values;
repeatedly acquiring first data as the data;
repeatedly acquiring second data as the data asynchronously with a timing of acquiring the first data;
updating the plurality of first weight values stored in the solver device on the basis of the first data; and
updating the plurality of second weight values stored in the solver device on the basis of the second data.

(Technical scheme 25)

A computer program comprising computer-readable instructions to be executed by a computer, the computer including a solver device, the instructions causing the computer to:

cause the solver device to store a plurality of first weight values and a plurality of second weight values;
cause the solver device to solve a combination optimization problem minimizing cost function including a plurality of weight values, the plurality of weight values being obtained by combining the plurality of first weight values and the plurality of second weight values;
repeatedly acquire first data as the data;
repeatedly acquire second data as the data asynchronously with a timing of acquiring the first data;
update the plurality of first weight values stored in the solver device on the basis of the first data; and
update the plurality of second weight values stored in the solver device on the basis of the second data.

(Technical scheme 26)

Circuit information described in a hardware description language, the circuit information representing a configuration of a circuit, the circuit information causing the circuit to function as an information processing device executing processing on data, the information processing device including a solver device, the processing comprising:

causing the solver device to store a plurality of first weight values and a plurality of second weight values;
causing the solver device to solve a combination optimization problem minimizing cost function including a plurality of weight values, the plurality of weight values being obtained by combining the plurality of first weight values and the plurality of second weight values;
repeatedly acquiring first data as the data;
repeatedly acquiring second data as the data asynchronously with a timing of acquiring the first data;
updating the plurality of first weight values stored in the solver device on the basis of the first data; and
updating the plurality of second weight values stored in the solver device on the basis of the second data.

(Technical scheme 27)

Circuit information written in a reconfigurable semiconductor device for operating the reconfigurable semiconductor device, the circuit information causing the reconfigurable semiconductor device to function as an information processing device executing processing, the information processing device including a solver device, the processing comprising:

causing the solver device to store a plurality of first weight values and a plurality of second weight values;
causing the solver device to solve a combination optimization problem minimizing cost function including a plurality of weight values, the plurality of weight values being obtained by combining the plurality of first weight values and the plurality of second weight values;
repeatedly acquiring first data as the data;
repeatedly acquiring second data as the data asynchronously with a timing of acquiring the first data;
updating the plurality of first weight values stored in the solver device on the basis of the first data; and
updating the plurality of second weight values stored in the solver device on the basis of the second data.

## Claims

1. An information processing device (20) executing processing on data, the information processing device comprising:

    a solver device (40) configured to

        store a plurality of first weight values and a plurality of second weight values, and
        solve a combination optimization problem minimizing cost function including a plurality of weight values, the plurality of weight values being obtained by combining the plurality of first weight values and the plurality of second weight values; and

    an information processing circuit (301) connected to the solver device (40) and configured to

        repeatedly acquire first data as the data,
        repeatedly acquire second data as the data asynchronously with a timing of acquiring the first data,
        update the plurality of first weight values stored in the solver device (40) on the basis of the first data, and
        update the plurality of second weight values stored in the solver device (40) on the basis of the second data.

2. The information processing device according to claim 1, wherein the information processing circuit (301) is configured to,

    in updating the plurality of first weight values, update the plurality of first weight values in response to acquiring the first data or in a predetermined first cycle, and,
    in updating the plurality of second weight values, update the plurality of second weight values in response to acquiring the second data or in a predetermined second cycle.

3. The information processing device according to claim 1, wherein the solver device (40) is configured to start solving the combination optimization problem in response to updating either the plurality of first weight values or the plurality of second weight values.

4. The information processing device according to claim 1 to 3, wherein the information processing circuit (301) is configured

    not to update the plurality of first weight values during solving by the solver device in updating the plurality of first weight values, and
    not to update the plurality of second weight values during solving by the solver device in updating the plurality of second weight values.

5. The information processing device according to claim 1 to 4, wherein the information processing circuit (301) is further configured to

    acquire a solution of the combination optimization problem from the solver device, and
    execute a process based on the solution in response to acquiring the solution.

6. The information processing device according to claim 1 to 5 , wherein

    the solver device (40) includes

a matrix arithmetic circuit (91) configured to calculate N second intermediate variables at a first time by matrix-multiplying N first intermediate variables at the first time and the matrix,
a first circuit (84) configured to calculate N first variables at a second time after the first time and N second variables at the second time on the basis of the N second intermediate variables at the first time,
a control circuit (85) configured to cause the matrix arithmetic circuit (91) and the first circuit (84) to execute processing from a start time to an end time, and
an output circuit (73) configured to generate and output the solution on the basis of the N first variables at the end time,

an i-th spin, where i is an integer of one or more and N or less, among N spins in the Ising model corresponds to an i-th point among N points,
an i-th first variable among the N first variables corresponds to the i-th spin,
an i-th second variable among the N second variables corresponds to the i-th spin,
the i-th first variable represents a position of a point corresponding to the i-th spin,
the i-th second variable represents a momentum of a point corresponding to the i-th spin,
an i-th first intermediate variable among the N first intermediate variables corresponds to the i-th first variable,
the i-th first intermediate variable is a value obtained by multiplying the i-th first variable or the i-th first variable by a preset coefficient, and
an i-th second intermediate variable among the N second intermediate variables corresponds to the i-th second variable.

**7.** The information processing device according to claim 6, wherein

the plurality of first weight values includes a first matrix including first weight values of N rows × N columns,
the plurality of second weight values includes a second matrix including second weight values of N rows × N columns, and
the matrix is represented by matrix addition of the first matrix and the second matrix.

**8.** The information processing device according to claim 7, wherein the matrix arithmetic circuit (91) is configured to

calculate the matrix by performing matrix addition on the first matrix and the second matrix, and
calculate the N second intermediate variables at the first time by executing matrix multiplication of the N first intermediate variables at the first time and the matrix.

**9.** The information processing device according to claim 7, wherein the matrix arithmetic circuit (91) is configured to

generate N first product-sum operation values by executing matrix multiplication of the N first intermediate variables at the first time and the first matrix,
generate N second product-sum operation values by executing matrix multiplication of the N first intermediate variables at the first time and the second matrix, and
calculate the N second intermediate variables at the first time by performing matrix addition on the N first product-sum operation values and the N second product-sum operation values.

**10.** The information processing device according to claim 7, wherein the matrix arithmetic circuit (91) is configured to

generate N weight values by executing a process of performing matrix addition on a column in the first matrix and a column in the second matrix by one column,
generate N multiplication values by multiplying an i-th weight value among the N weight values by the i-th first intermediate variable, and
calculate the N second intermediate variables at the first time by summing the N multiplication values.

**11.** The information processing device according to claim 7, wherein the matrix arithmetic circuit (91) is configured to

calculate N first multiplication values by multiplying an i-th first weight value among N first weight values included in the first matrix by the i-th first intermediate variable,
calculate N second multiplication values by multiplying an i-th second weight value among N second weight values included in the second matrix by the i-th first intermediate variable,
calculate a first product-sum operation value obtained by adding all of the N first multiplication values,

calculate a second product-sum operation value obtained by adding all of the N second multiplication values, and calculate the N second intermediate variables at the first time by adding the first product-sum operation value to the second product-sum operation value.

**12.** The information processing device according to any one of claims 1 to 11, wherein

the information processing circuit (301) is configured to, in acquiring the first data, acquire a market state packet as the first data from a market server device serving to perform transactions of a plurality of targets,
the market state packet includes a transaction price for at least one target of the plurality of targets,
a plurality of decision variables included in the cost function in the combination optimization problem correspond to the plurality of targets on a one-to-one basis, and
each decision variable of the plurality of decision variables represents whether to transact a corresponding target among the plurality of targets.

**13.** The information processing device according to any one of claims 1 to 11, wherein the first data includes coordinate data representing coordinates of an object.

**14.** An information processing method implemented by a computer executing processing on data, the computer including a solver device (40), the method comprising:

causing the solver device (40) to store a plurality of first weight values and a plurality of second weight values;
causing the solver device (40) to solve a combination optimization problem minimizing cost function including a plurality of weight values, the plurality of weight values being obtained by combining the plurality of first weight values and the plurality of second weight values;
repeatedly acquiring first data as the data;
repeatedly acquiring second data as the data asynchronously with a timing of acquiring the first data;
updating the plurality of first weight values stored in the solver device (40) on the basis of the first data; and
updating the plurality of second weight values stored in the solver device (40) on the basis of the second data.

**15.** A computer program comprising computer-readable instructions to be executed by a computer, the computer including a solver device (40), the instructions causing the computer to:

cause the solver device (40) to store a plurality of first weight values and a plurality of second weight values;
cause the solver device (40) to solve a combination optimization problem minimizing cost function including a plurality of weight values, the plurality of weight values being obtained by combining the plurality of first weight values and the plurality of second weight values;
repeatedly acquire first data as the data;
repeatedly acquire second data as the data asynchronously with a timing of acquiring the first data;
update the plurality of first weight values stored in the solver device (40) on the basis of the first data; and
update the plurality of second weight values stored in the solver device (40) on the basis of the second data.

**16.** Circuit information described in a hardware description language, the circuit information representing a configuration of a circuit, the circuit information causing the circuit to function as an information processing device executing processing on data, the information processing device including a solver device (40), the processing comprising:

causing the solver device (40) to store a plurality of first weight values and a plurality of second weight values;
causing the solver device (40) to solve a combination optimization problem minimizing cost function including a plurality of weight values, the plurality of weight values being obtained by combining the plurality of first weight values and the plurality of second weight values;
repeatedly acquiring first data as the data;
repeatedly acquiring second data as the data asynchronously with a timing of acquiring the first data;
updating the plurality of first weight values stored in the solver device (40) on the basis of the first data; and
updating the plurality of second weight values stored in the solver device (40) on the basis of the second data.

**17.** Circuit information written in a reconfigurable semiconductor device for operating the reconfigurable semiconductor device, the circuit information causing the reconfigurable semiconductor device to function as an information processing device executing processing, the information processing device including a solver device (40), the processing comprising:

causing the solver device (40) to store a plurality of first weight values and a plurality of second weight values;
causing the solver device (40) to solve a combination optimization problem minimizing cost function including a plurality of weight values, the plurality of weight values being obtained by combining the plurality of first weight values and the plurality of second weight values;
repeatedly acquiring first data as the data;
repeatedly acquiring second data as the data asynchronously with a timing of acquiring the first data;
updating the plurality of first weight values stored in the solver device (40) on the basis of the first data; and
updating the plurality of second weight values stored in the solver device (40) on the basis of the second data.

FIG.1

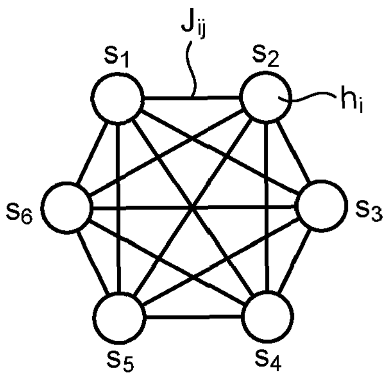


N-size problem

FIG.2

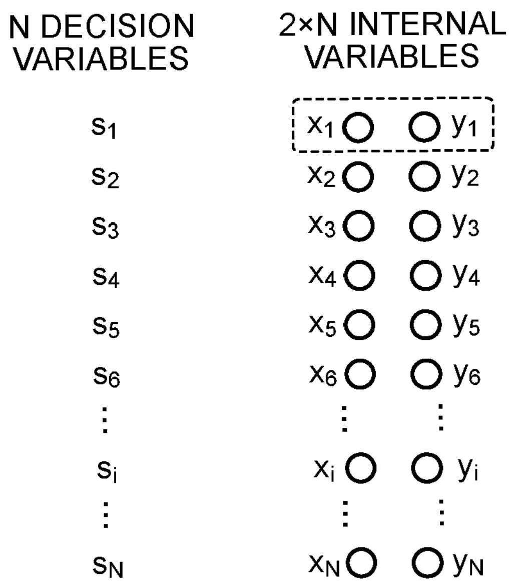

FIG.3

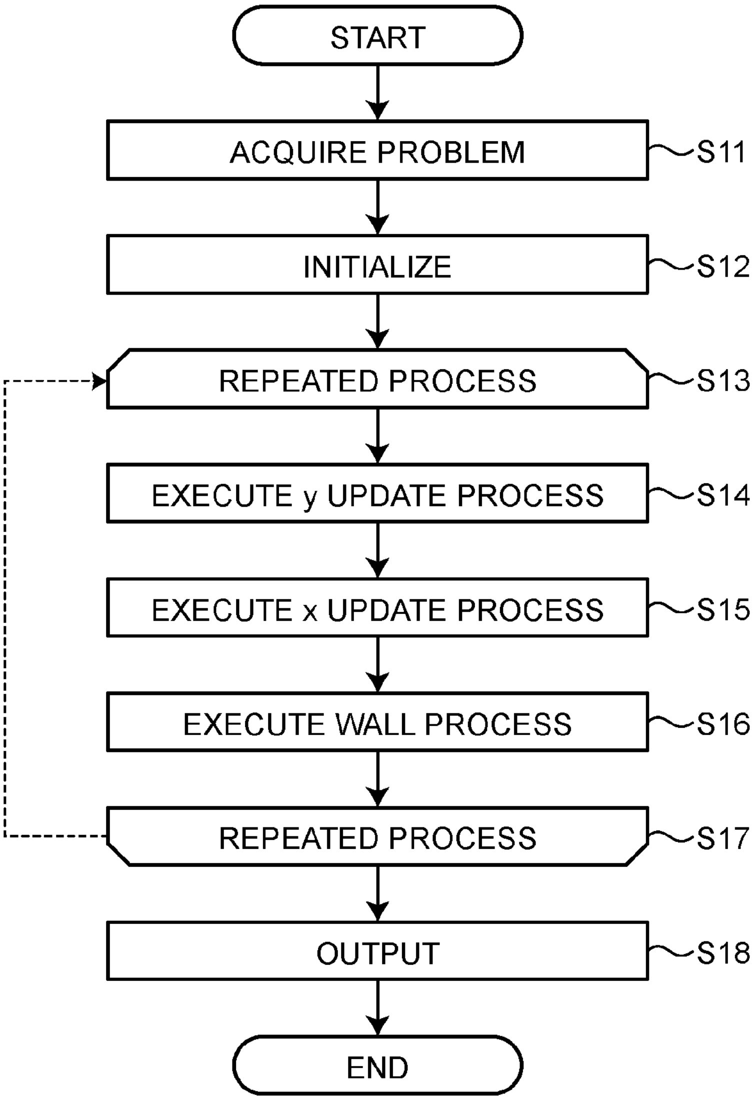
START
ACQUIRE PROBLEM
S11
INITIALIZE
S12
REPEATED PROCESS
S13
EXECUTE y UPDATE PROCESS
S14
EXECUTE x UPDATE PROCESS
S15
EXECUTE WALL PROCESS
S16
REPEATED PROCESS
S17
OUTPUT
S18
END

FIG.4

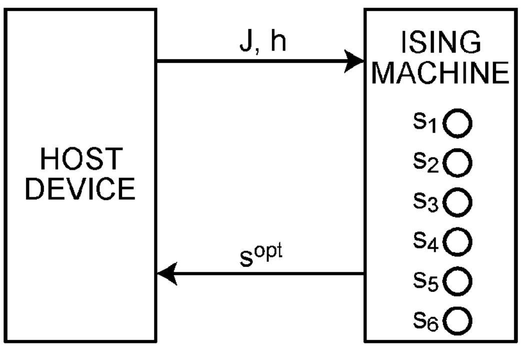
HOST DEVICE
J, h
ISING MACHINE
s1
s2
s3
s4
s5
s6
sopt

FIG.5

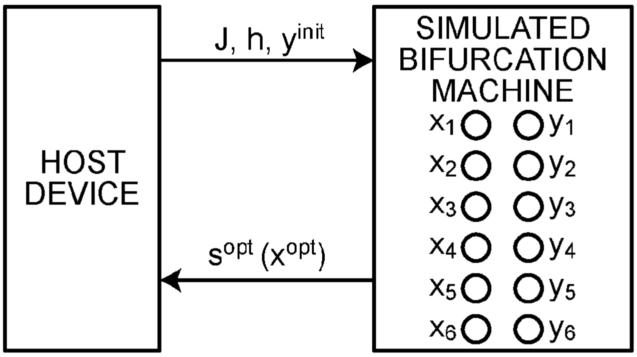
HOST DEVICE
J, h, $y^{init}$
SIMULATED BIFURCATION MACHINE
$x_1$ $y_1$
$x_2$ $y_2$
$x_3$ $y_3$
$x_4$ $y_4$
$x_5$ $y_5$
$x_6$ $y_6$
$s^{opt}$ ($x^{opt}$)

FIG.6

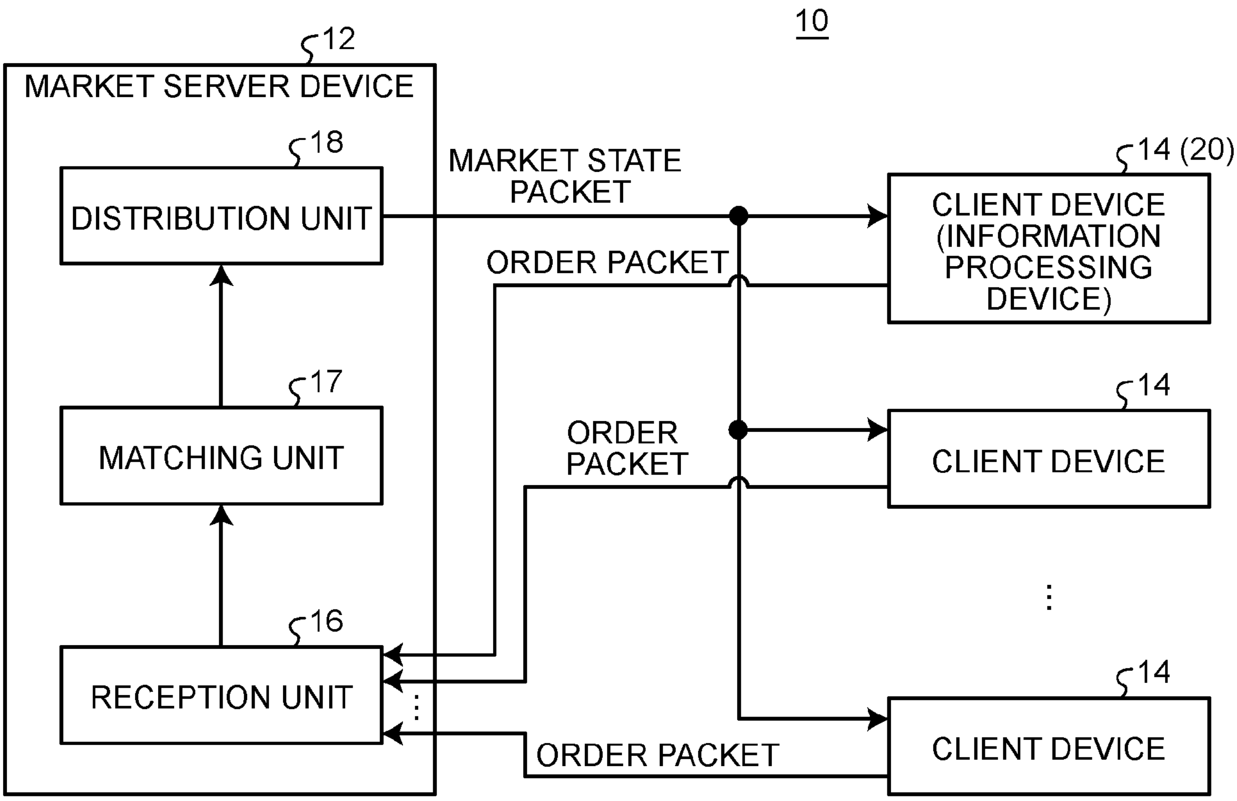
10
12
MARKET SERVER DEVICE
18
DISTRIBUTION UNIT
17
MATCHING UNIT
16
RECEPTION UNIT
MARKET STATE PACKET
ORDER PACKET
ORDER PACKET
ORDER PACKET
14 (20)
CLIENT DEVICE (INFORMATION PROCESSING DEVICE)
14
CLIENT DEVICE
14
CLIENT DEVICE

FIG.7

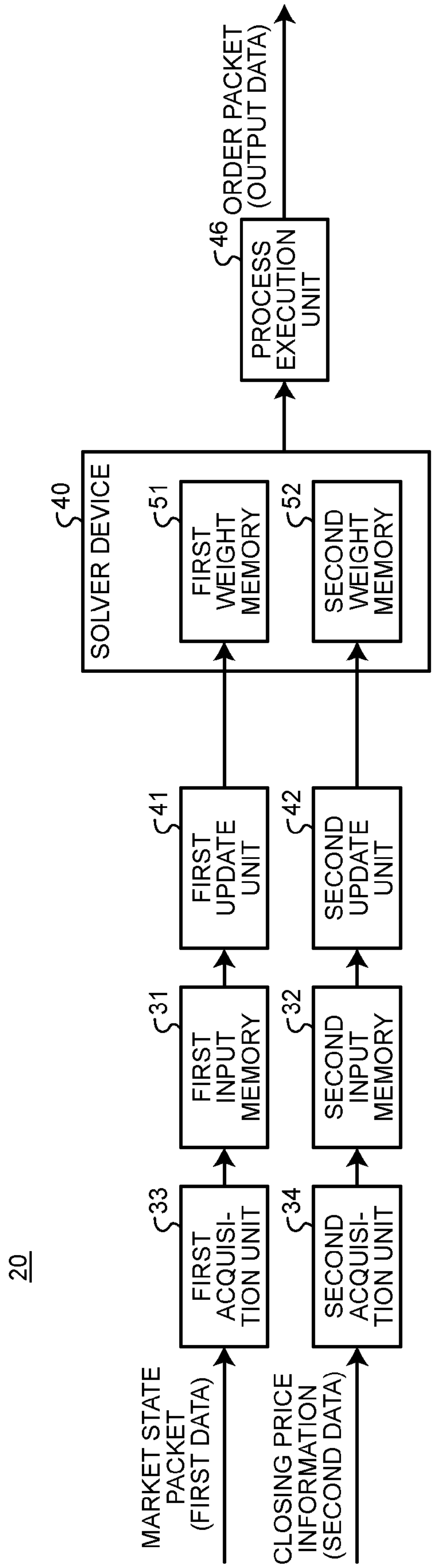
20
MARKET STATE PACKET (FIRST DATA)
CLOSING PRICE INFORMATION (SECOND DATA)
33
FIRST ACQUISITION UNIT
34
SECOND ACQUISITION UNIT
31
FIRST INPUT MEMORY
32
SECOND INPUT MEMORY
41
FIRST UPDATE UNIT
42
SECOND UPDATE UNIT
40
SOLVER DEVICE
51
FIRST WEIGHT MEMORY
52
SECOND WEIGHT MEMORY
46
PROCESS EXECUTION UNIT
ORDER PACKET (OUTPUT DATA)

FIG.8

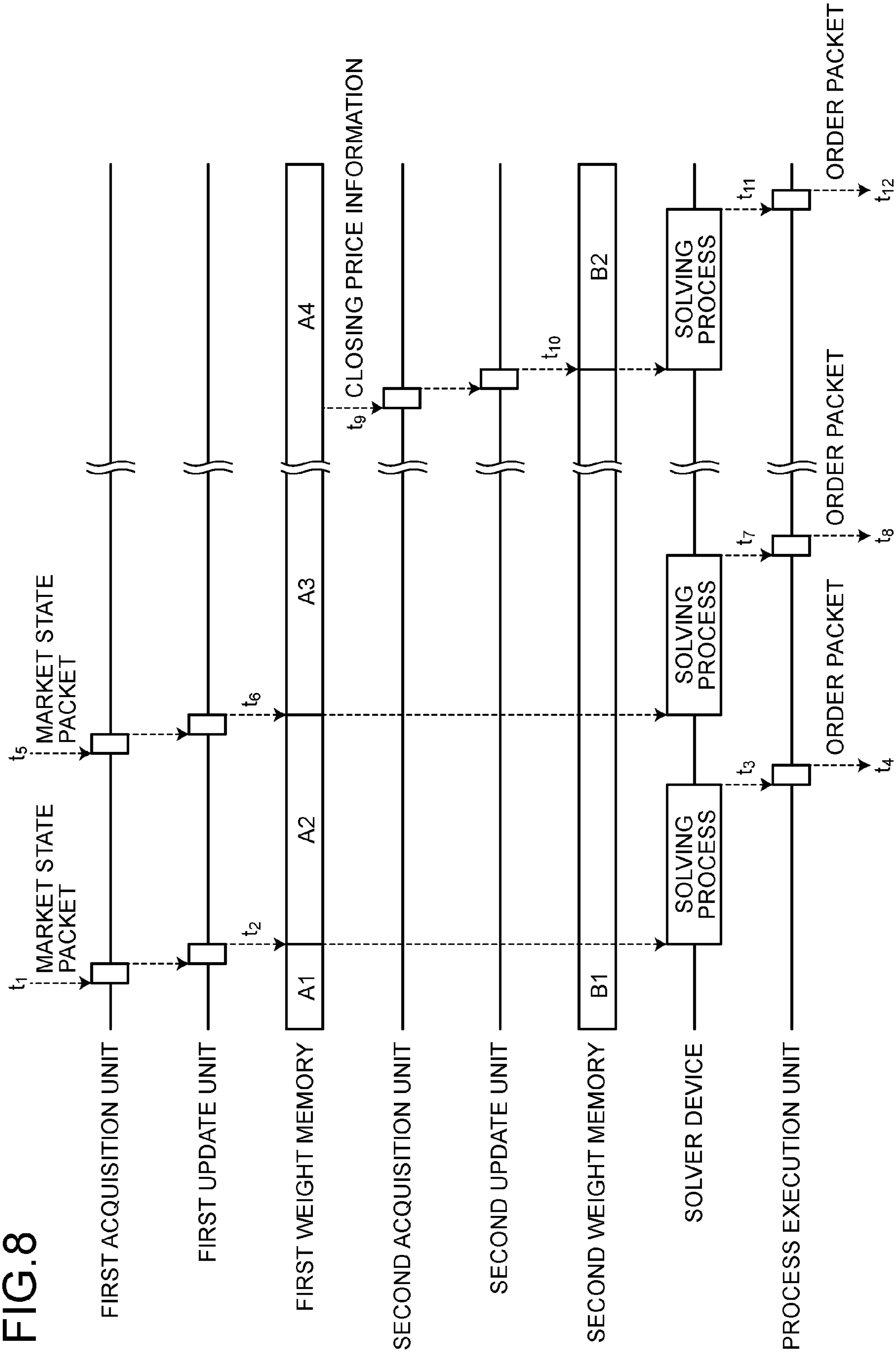
FIRST ACQUISITION UNIT
FIRST UPDATE UNIT
FIRST WEIGHT MEMORY
SECOND ACQUISITION UNIT
SECOND UPDATE UNIT
SECOND WEIGHT MEMORY
SOLVER DEVICE
PROCESS EXECUTION UNIT
MARKET STATE PACKET
MARKET STATE PACKET
CLOSING PRICE INFORMATION
A1
A2
A3
A4
B1
B2
SOLVING PROCESS
SOLVING PROCESS
SOLVING PROCESS
ORDER PACKET
ORDER PACKET
ORDER PACKET
t1
t2
t3
t4
t5
t6
t7
t8
t9
t10
t11
t12

FIG.9

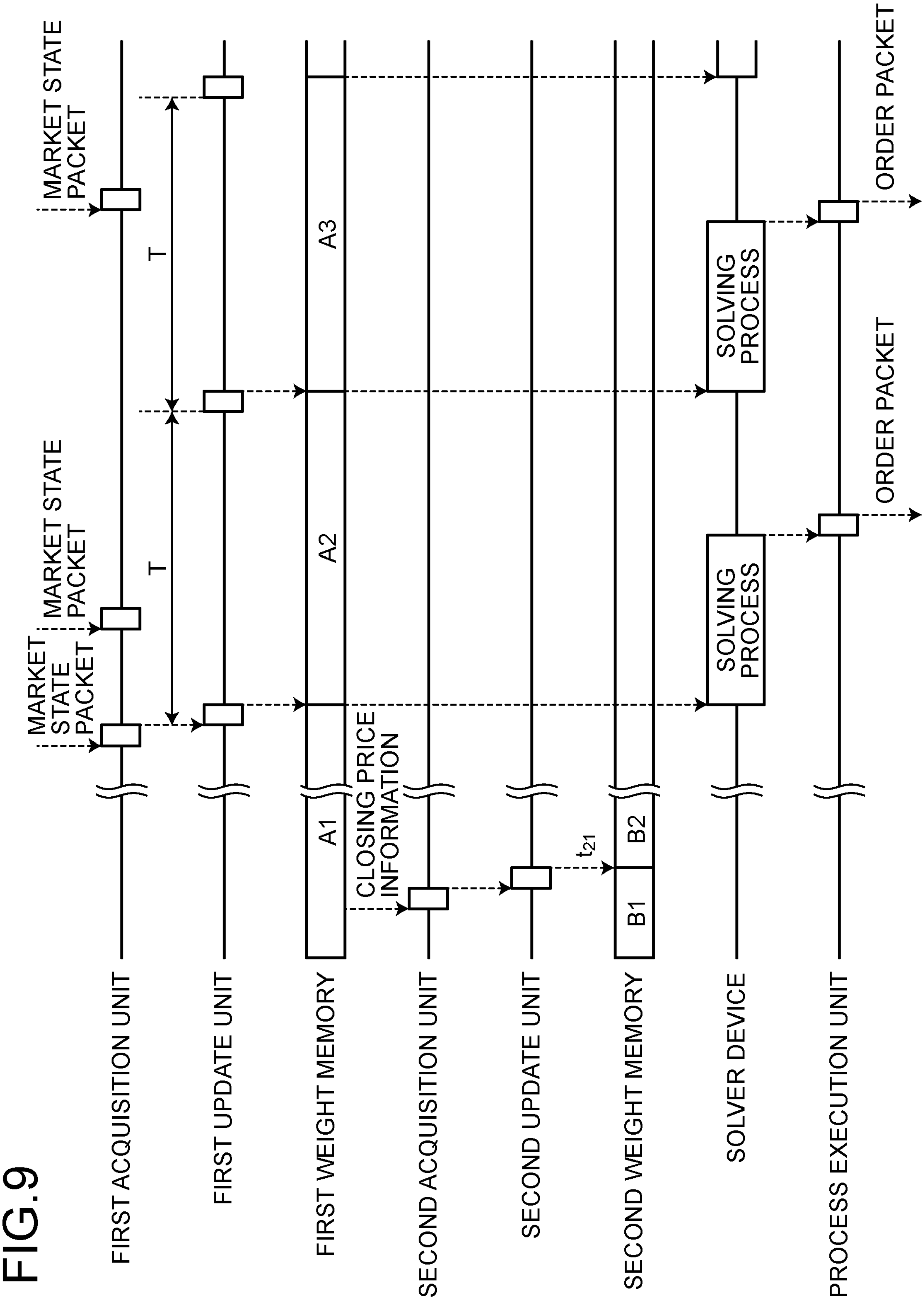
FIRST ACQUISITION UNIT
FIRST UPDATE UNIT
FIRST WEIGHT MEMORY
SECOND ACQUISITION UNIT
SECOND UPDATE UNIT
SECOND WEIGHT MEMORY
SOLVER DEVICE
PROCESS EXECUTION UNIT
MARKET STATE PACKET
MARKET STATE PACKET
MARKET STATE PACKET
T
T
A1
A2
A3
CLOSING PRICE INFORMATION
$t_{21}$
B1
B2
SOLVING PROCESS
SOLVING PROCESS
ORDER PACKET
ORDER PACKET

FIG.10

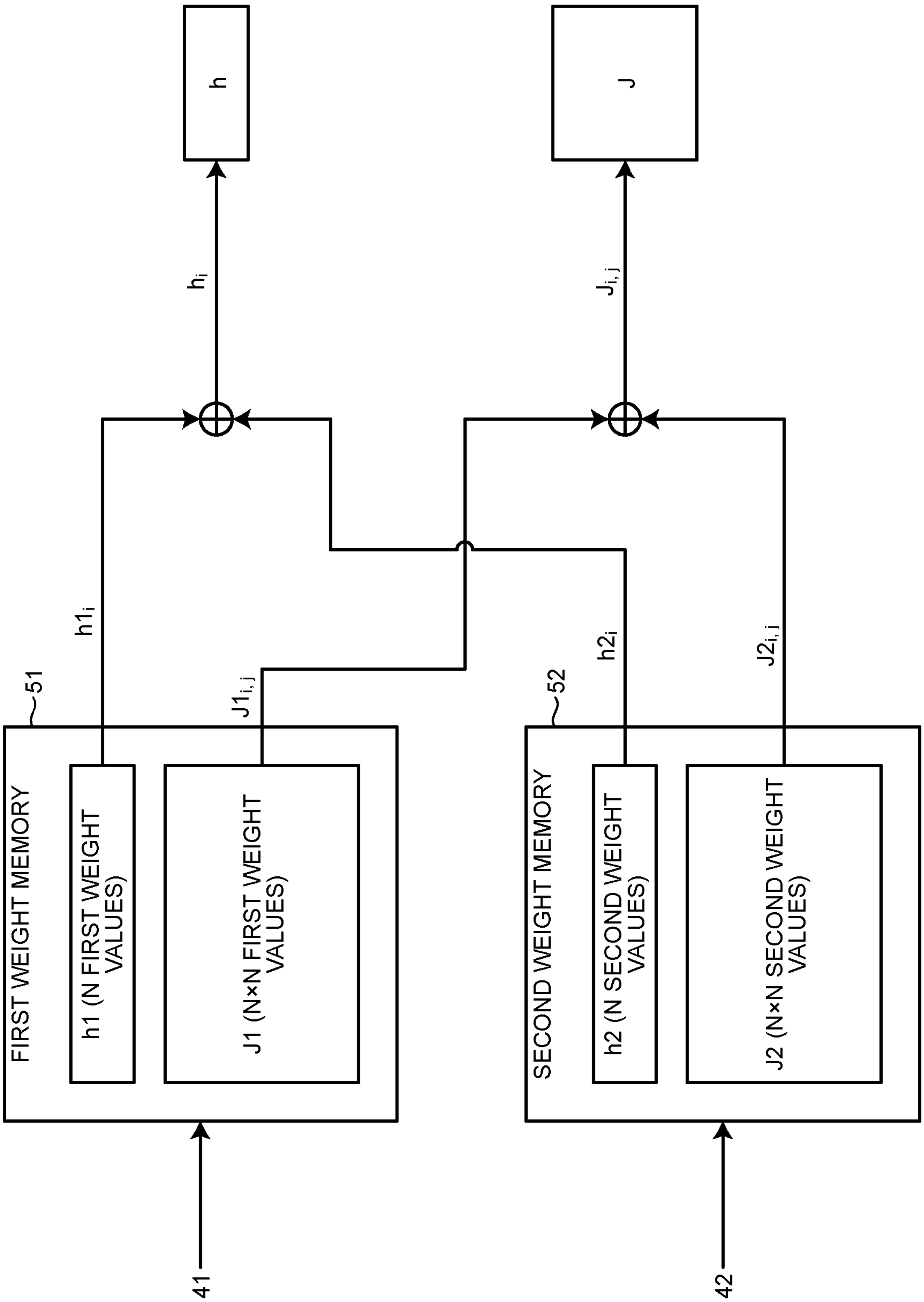
FIRST WEIGHT MEMORY
51
h1 (N FIRST WEIGHT VALUES)
J1 (N×N FIRST WEIGHT VALUES)
SECOND WEIGHT MEMORY
52
h2 (N SECOND WEIGHT VALUES)
J2 (N×N SECOND WEIGHT VALUES)
41
42
h1i
J1i, j
h2i
J2i, j
hi
Ji, j
h
J

FIG.11

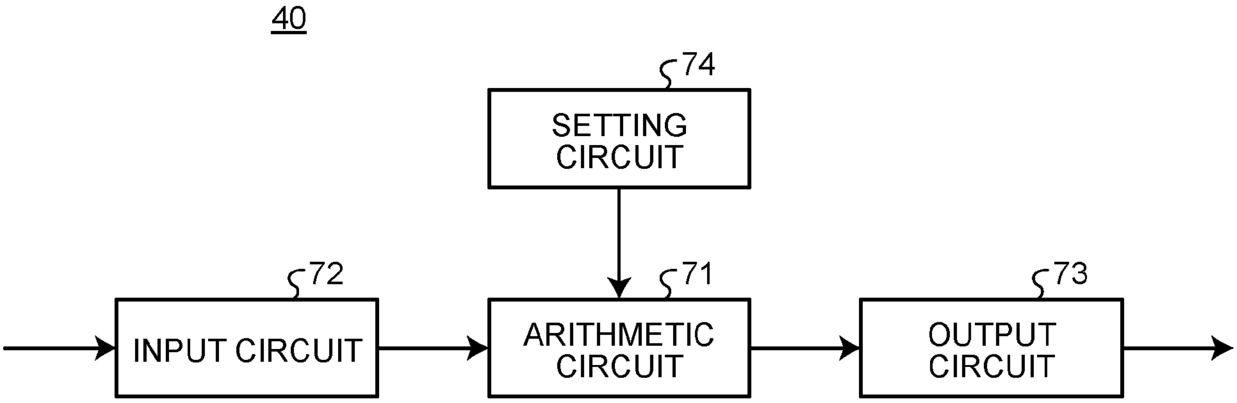
40
74
SETTING CIRCUIT
72
INPUT CIRCUIT
71
ARITHMETIC CIRCUIT
73
OUTPUT CIRCUIT

FIG.12

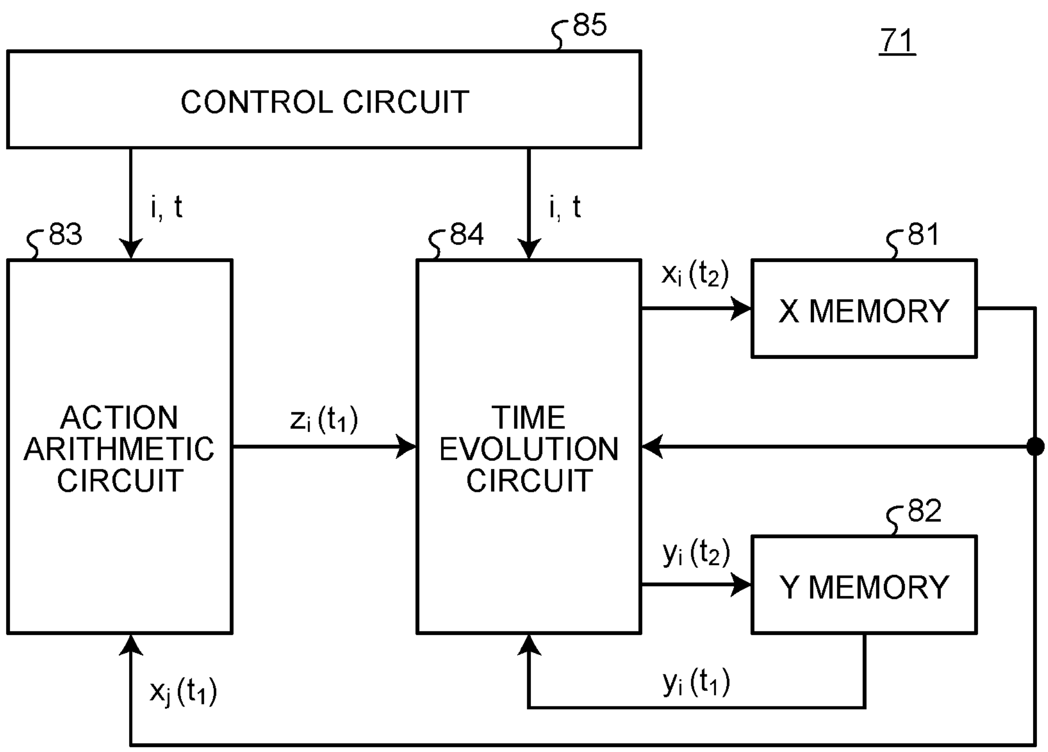
85
71
CONTROL CIRCUIT
i, t
i, t
83
84
81
$x_i(t_2)$
X MEMORY
ACTION ARITHMETIC CIRCUIT
$z_i(t_1)$
TIME EVOLUTION CIRCUIT
82
$y_i(t_2)$
Y MEMORY
$x_j(t_1)$
$y_i(t_1)$

FIG.13

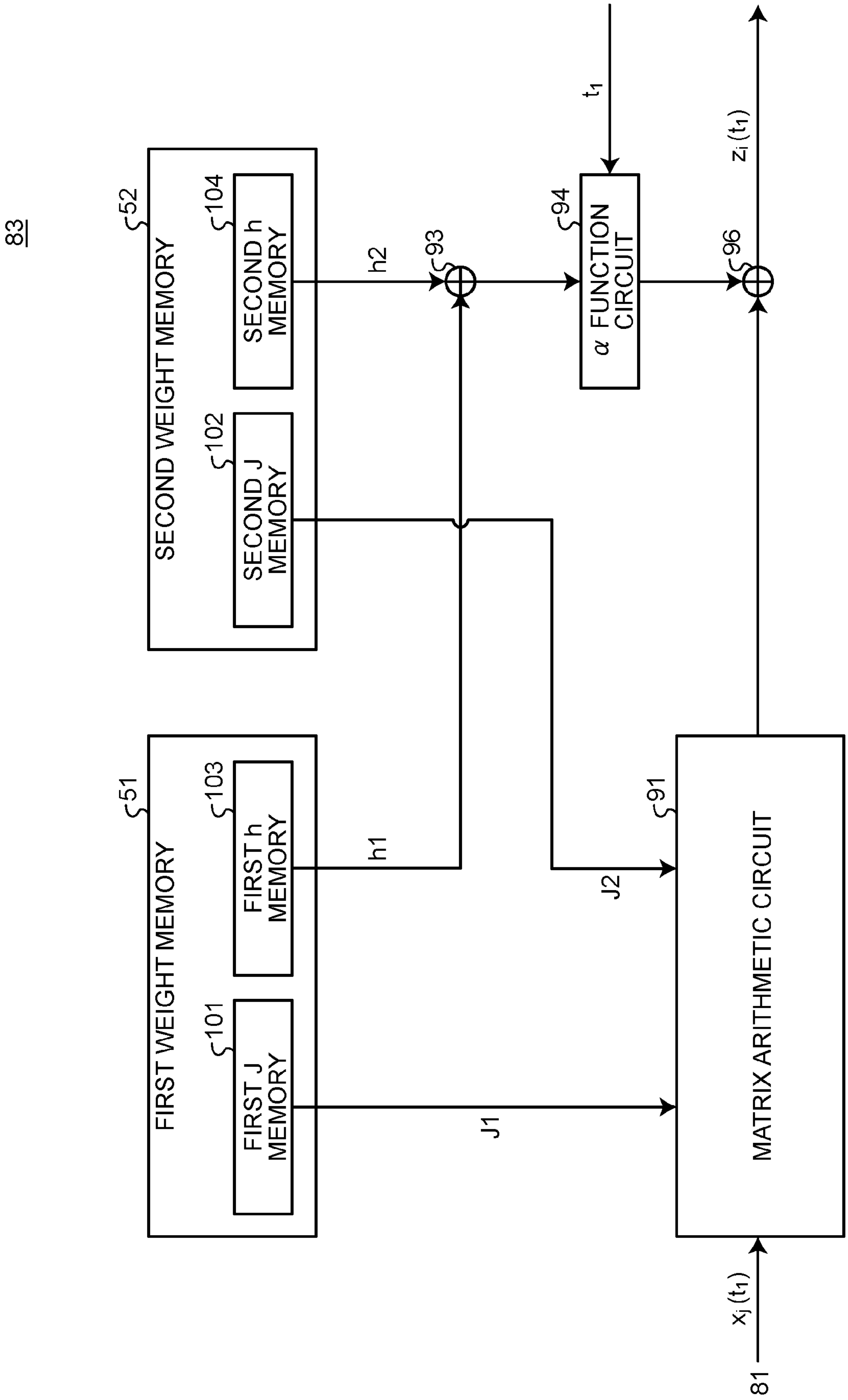
83
52
SECOND WEIGHT MEMORY
102
SECOND J MEMORY
104
SECOND h MEMORY
51
FIRST WEIGHT MEMORY
101
FIRST J MEMORY
103
FIRST h MEMORY
h2
93
h1
J1
J2
94
α FUNCTION CIRCUIT
$t_1$
91
MATRIX ARITHMETIC CIRCUIT
96
$z_i(t_1)$
$x_j(t_1)$
81

FIG.14

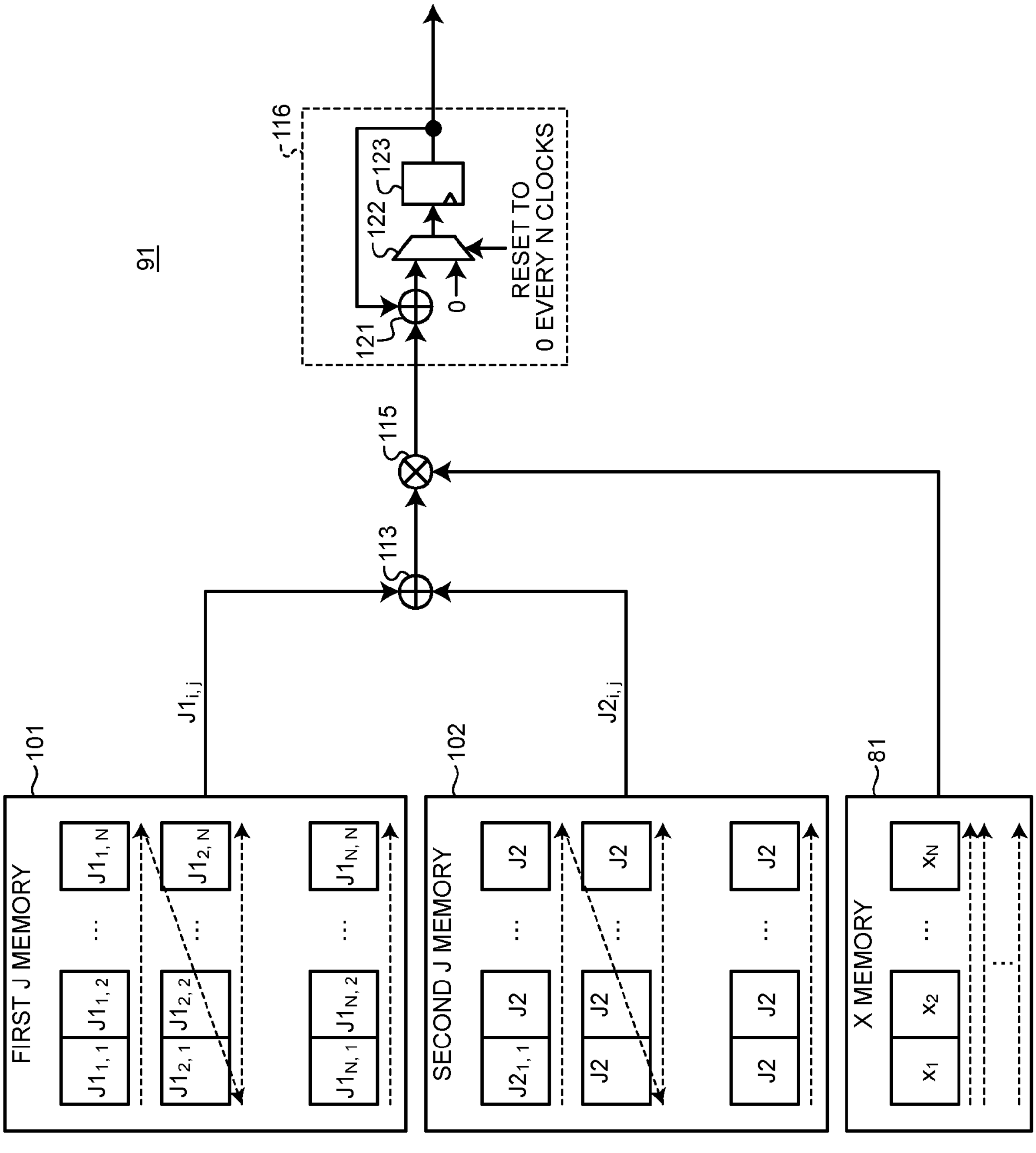
91
116
121
122
123
0
RESET TO
0 EVERY N CLOCKS
115
113
$J1_{i,j}$
$J2_{i,j}$
101
FIRST J MEMORY
$J1_{1,1}$
$J1_{1,2}$
$J1_{1,N}$
$J1_{2,1}$
$J1_{2,2}$
$J1_{2,N}$
$J1_{N,1}$
$J1_{N,2}$
$J1_{N,N}$
102
SECOND J MEMORY
$J2_{1,1}$
J2
81
X MEMORY
$x_1$
$x_2$
$x_N$

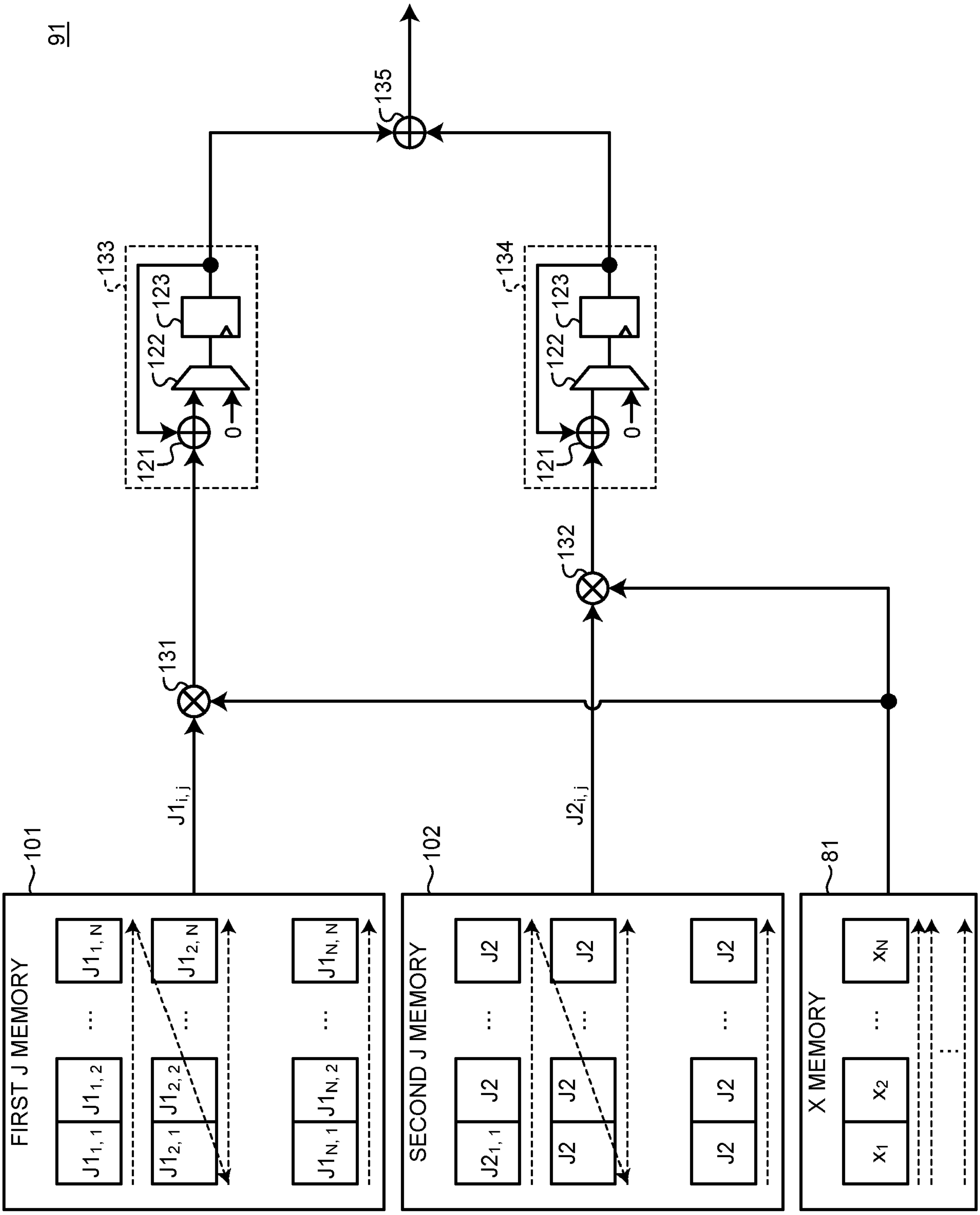
91
FIRST J MEMORY
101
SECOND J MEMORY
102
X MEMORY
81
$J1_{1,1}$ $J1_{1,2}$ … $J1_{1,N}$
$J1_{2,1}$ $J1_{2,2}$ … $J1_{2,N}$
$J1_{N,1}$ $J1_{N,2}$ … $J1_{N,N}$
$J2_{1,1}$ J2 … J2
J2 J2 … J2
J2 J2 … J2
$x_1$ $x_2$ … $x_N$
$J1_{i,j}$
$J2_{i,j}$
131
132
121
122
123
0
133
134
135

FIG.15

FIG.16

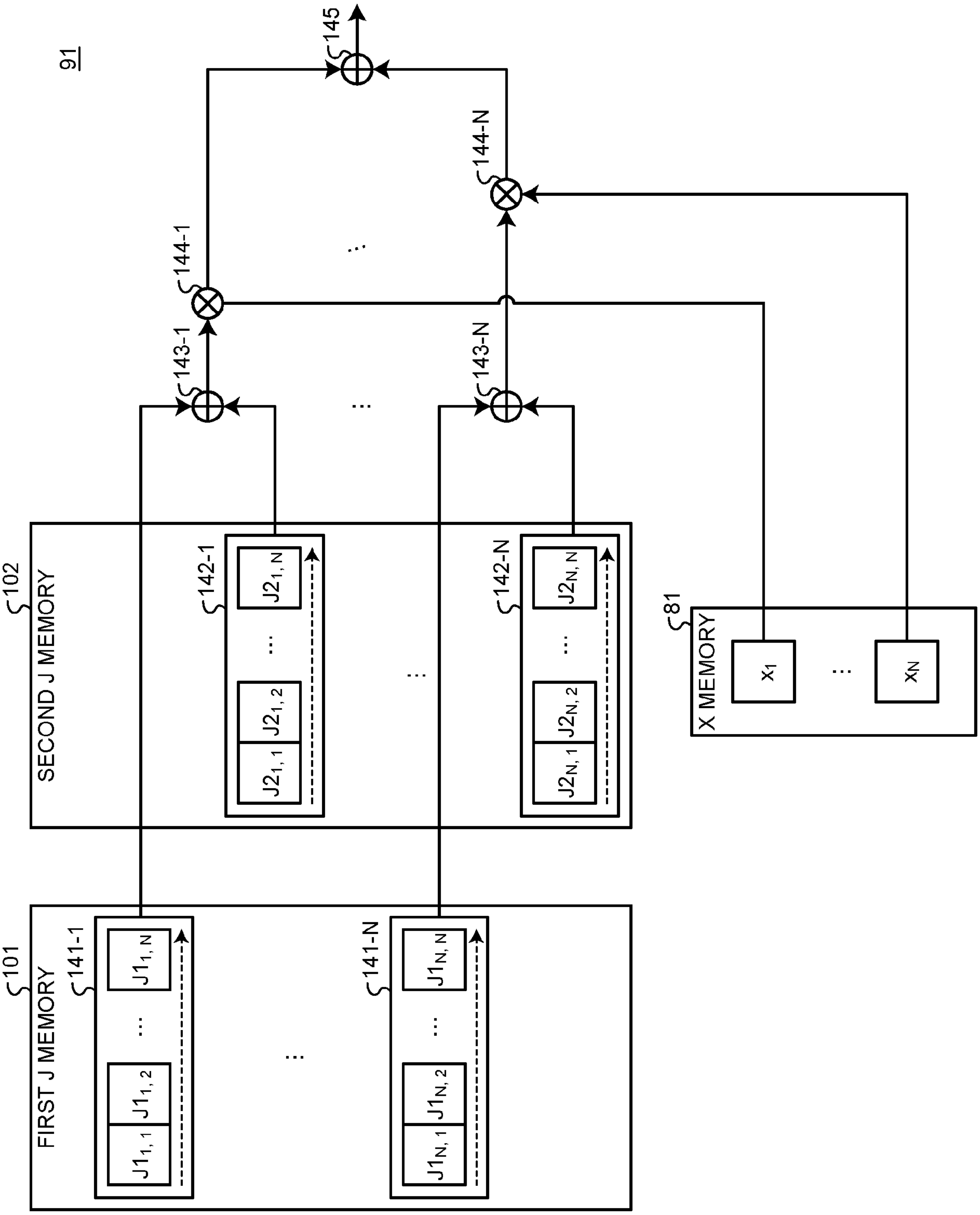

91
101
FIRST J MEMORY
141-1
$J1_{1,1}$
$J1_{1,2}$
...
$J1_{1,N}$
141-N
$J1_{N,1}$
$J1_{N,2}$
$J1_{N,N}$
102
SECOND J MEMORY
142-1
$J2_{1,1}$
$J2_{1,2}$
$J2_{1,N}$
142-N
$J2_{N,1}$
$J2_{N,2}$
$J2_{N,N}$
81
X MEMORY
$x_1$
$x_N$
143-1
143-N
144-1
144-N
145

FIG.17

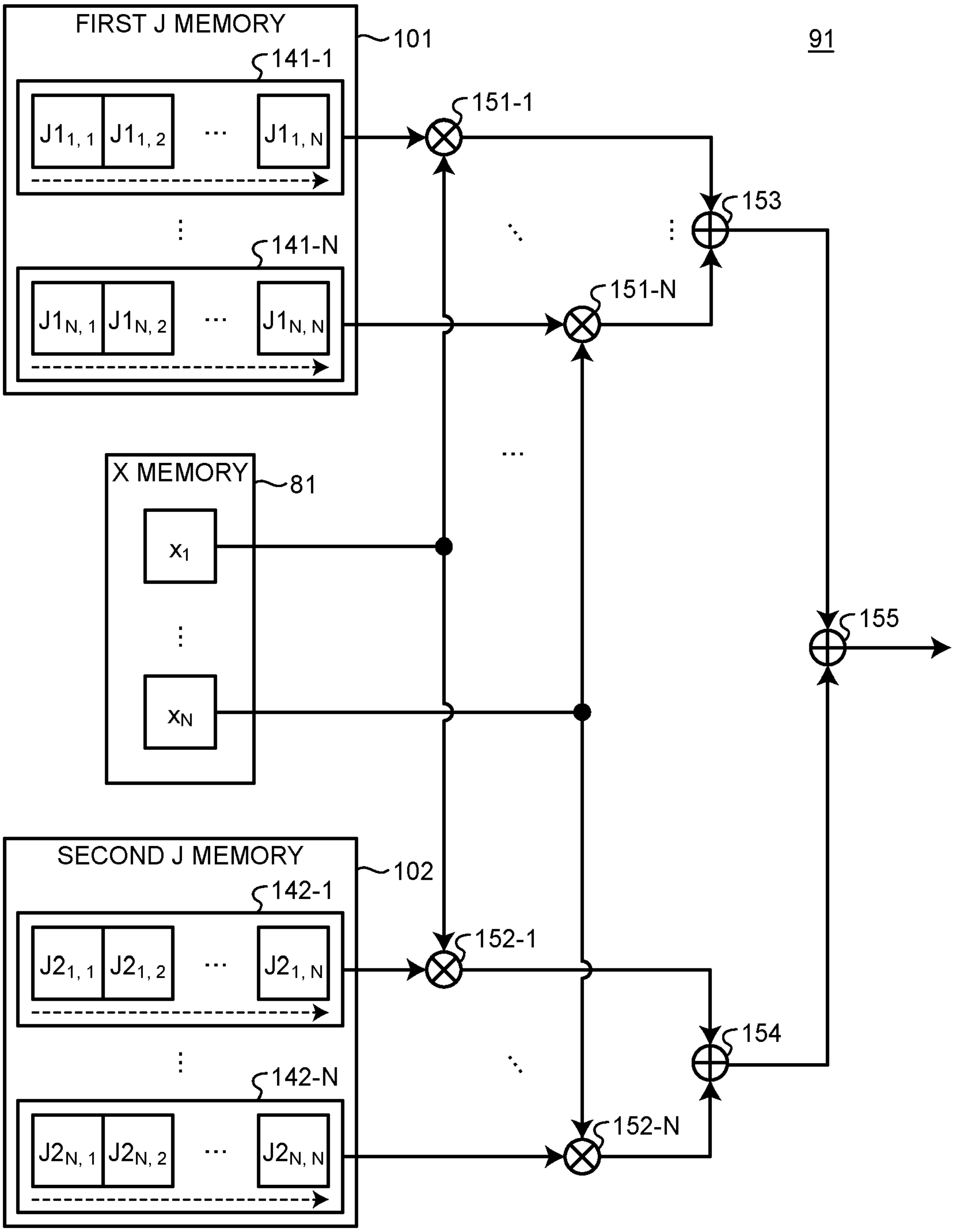

FIRST J MEMORY
101
91
141-1
$J1_{1,1}$ $J1_{1,2}$ ··· $J1_{1,N}$
141-N
$J1_{N,1}$ $J1_{N,2}$ ··· $J1_{N,N}$
151-1
151-N
153
X MEMORY
81
$x_1$
$x_N$
155
SECOND J MEMORY
102
142-1
$J2_{1,1}$ $J2_{1,2}$ ··· $J2_{1,N}$
142-N
$J2_{N,1}$ $J2_{N,2}$ ··· $J2_{N,N}$
152-1
152-N
154

FIG.18

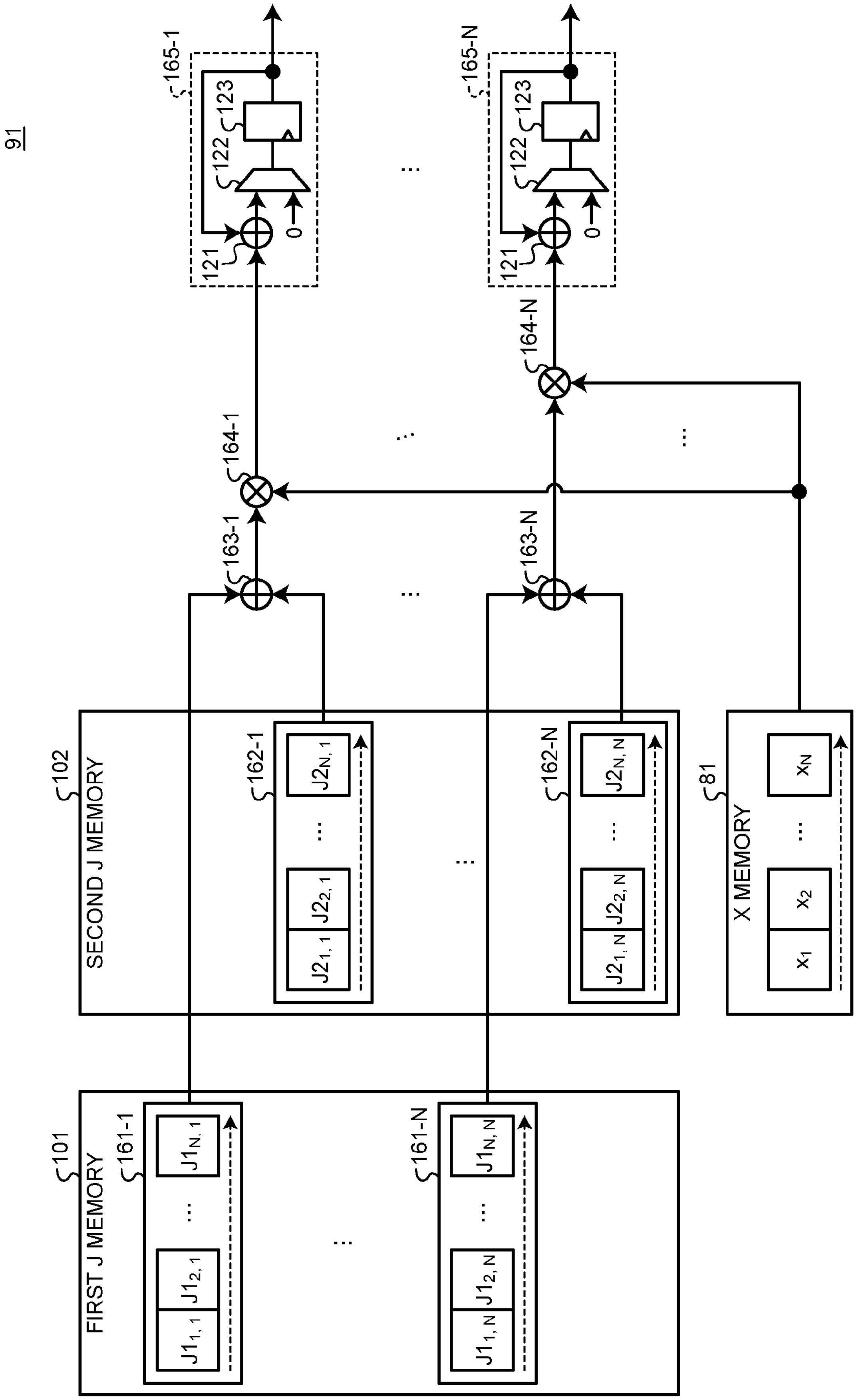
91
FIRST J MEMORY
101
161-1
161-N
SECOND J MEMORY
102
162-1
162-N
X MEMORY
81
163-1
163-N
164-1
164-N
165-1
165-N
121
122
123
0

FIG.19

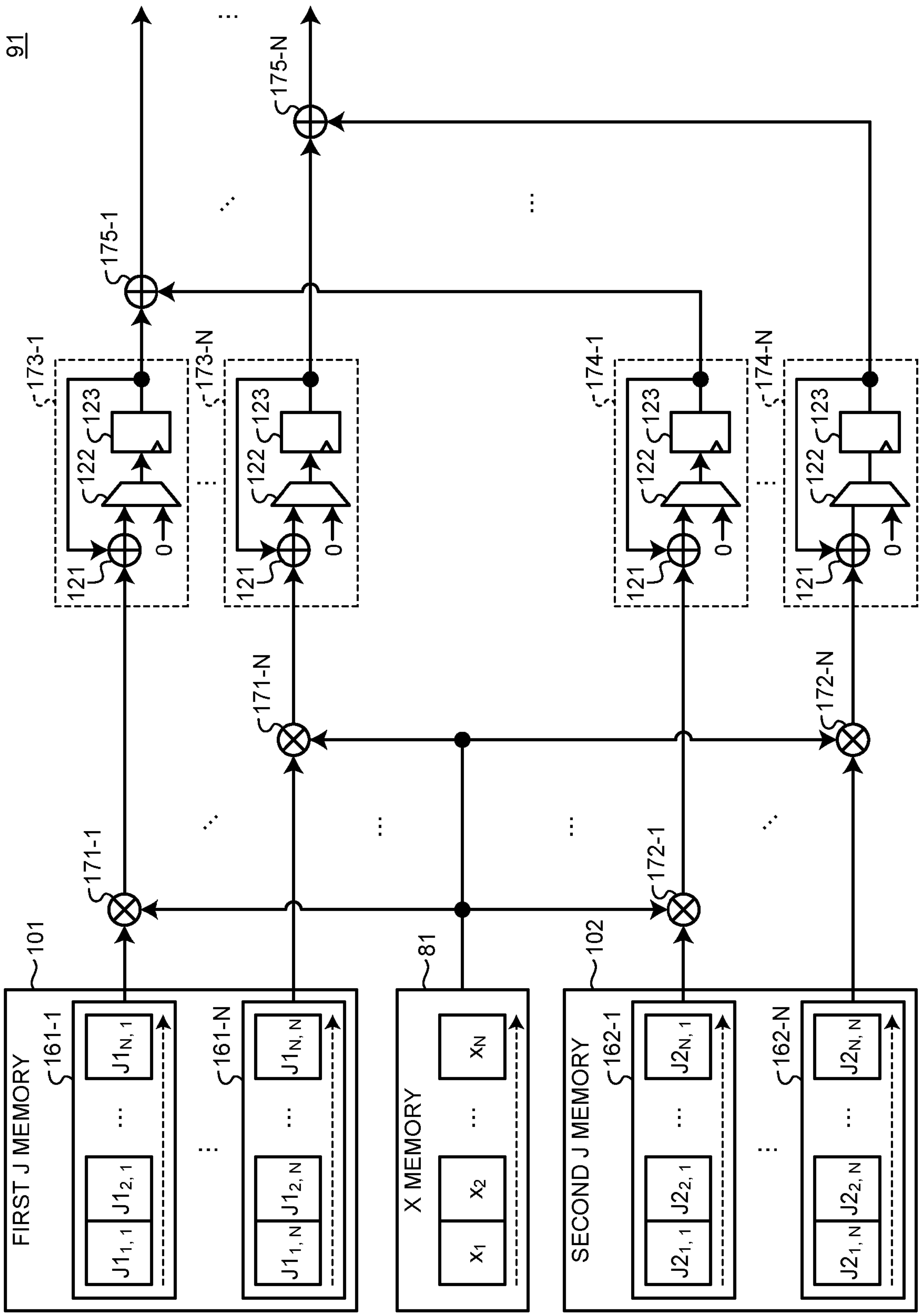
91
FIRST J MEMORY
101
161-1
161-N
$J1_{1,1}$
$J1_{2,1}$
$J1_{N,1}$
$J1_{1,N}$
$J1_{2,N}$
$J1_{N,N}$
X MEMORY
81
$x_1$
$x_2$
$x_N$
SECOND J MEMORY
102
162-1
162-N
$J2_{1,1}$
$J2_{2,1}$
$J2_{N,1}$
$J2_{1,N}$
$J2_{2,N}$
$J2_{N,N}$
171-1
171-N
172-1
172-N
173-1
173-N
174-1
174-N
121
122
123
0
175-1
175-N

FIG.20

210

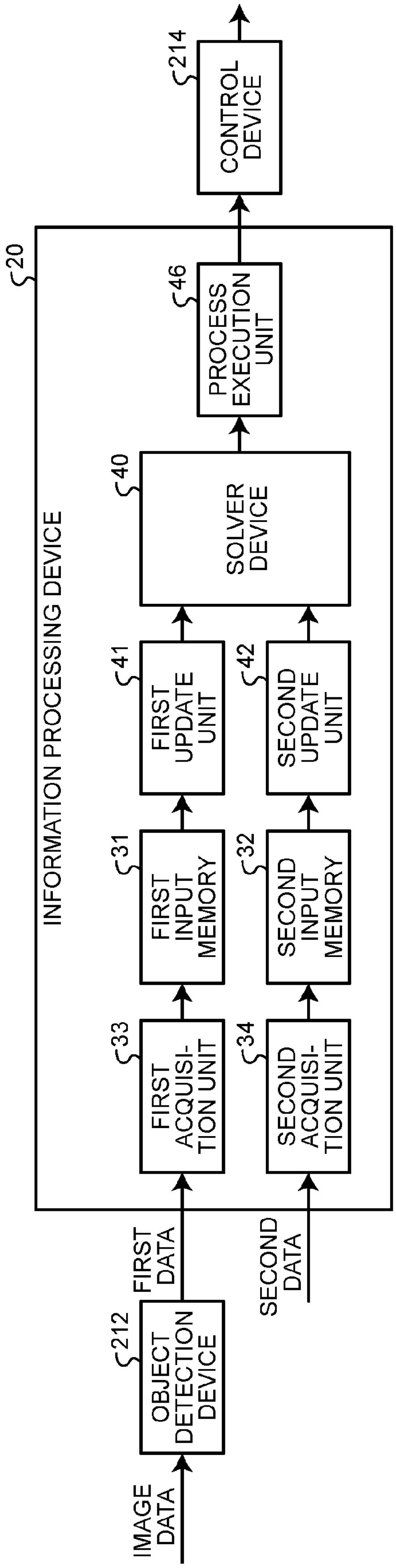
IMAGE DATA
OBJECT DETECTION DEVICE
212
FIRST DATA
SECOND DATA
INFORMATION PROCESSING DEVICE
20
FIRST ACQUISITION UNIT
33
SECOND ACQUISITION UNIT
34
FIRST INPUT MEMORY
31
SECOND INPUT MEMORY
32
FIRST UPDATE UNIT
41
SECOND UPDATE UNIT
42
SOLVER DEVICE
40
PROCESS EXECUTION UNIT
46
CONTROL DEVICE
214

FIG.21

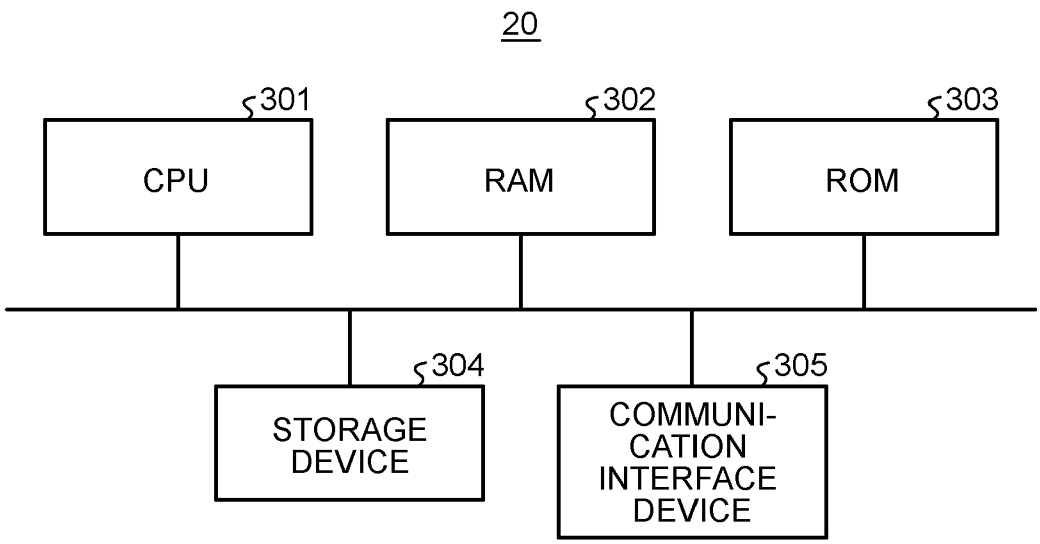
20
301
302
303
CPU
RAM
ROM
304
305
STORAGE DEVICE
COMMUNI-CATION INTERFACE DEVICE

Europäisches Patentamt
European Patent Office
Office européen des brevets

# EUROPEAN SEARCH REPORT

Application Number
EP 24 15 9780

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KOSUKE TATSUMURA ET AL: "Real-time Trading System based on Selections of Potentially Profitable, Uncorrelated, and Balanced Stocks by NP-hard Combinatorial Optimization", ARXIV.ORG, CORNELL UNIVERSITY LIBRARY, 201 OLIN LIBRARY CORNELL UNIVERSITY ITHACA, NY 14853, 12 July 2023 (2023-07-12), XP091561699, * abstract; sections 2.3, 3, 3.1, 3.2, 3.3; figures 1, 2 * | 1-17 | INV. G06N5/01 |
| A | KOSUKE TATSUMURA ET AL: "Pairs-trading System using Quantum-inspired Combinatorial Optimization Accelerator for Optimal Path Search in Market Graphs", ARXIV.ORG, CORNELL UNIVERSITY LIBRARY, 201 OLIN LIBRARY CORNELL UNIVERSITY ITHACA, NY 14853, 12 July 2023 (2023-07-12), XP091561173, * abstract; sections 2.2, 3, 3.1, 3.2, 3.3; figure 4 * | 1-17 | |

-/--

TECHNICAL FIELDS SEARCHED (IPC)
G06N

The present search report has been drawn up for all claims

1

| Place of search | Date of completion of the search | Examiner |
|---|---|---|
| The Hague | 6 August 2024 | Tebbal Barracosa, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 24 15 9780

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TATSUMURA KOSUKE KOSUKE TATSUMURA@TOSHIBA CO JP: "Large-scale combinatorial optimization in real-time systems by FPGA-based accelerators for simulated bifurcation", PROCEEDINGS OF THE 11TH INTERNATIONAL SYMPOSIUM ON HIGHLY EFFICIENT ACCELERATORS AND RECONFIGURABLE TECHNOLOGIES, ACMPUB27, NEW YORK, NY, USA, 21 June 2021 (2021-06-21), pages 1-6, XP058592546, DOI: 10.1145/3468044.3468045 ISBN: 978-1-4503-8549-7 * abstract; sections 2, 3, 4; figures 5, 7 * | 1-17 | |
| A | TATSUMURA KOSUKE ET AL: "FPGA-Based Simulated Bifurcation Machine", 2019 29TH INTERNATIONAL CONFERENCE ON FIELD PROGRAMMABLE LOGIC AND APPLICATIONS (FPL), IEEE, 8 September 2019 (2019-09-08), pages 59-66, XP033649156, DOI: 10.1109/FPL.2019.00019 [retrieved on 2019-11-05] * abstract; sections II, III; figures 1-4 * | 1-17 | TECHNICAL FIELDS SEARCHED (IPC) |

The present search report has been drawn up for all claims

1

| Place of search | Date of completion of the search | Examiner |
|---|---|---|
| The Hague | 6 August 2024 | Tebbal Barracosa, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021060864 A
- JP 2019145010 A
- JP 2019159566 A
- JP 2021043667 A
- JP 2021043589 A


### Non-patent literature cited in the description


- **HAYATO GOTO** ; **KOSUKE TATSUMURA** ; **ALEXANDER R. DIXON**. Combinatorial optimization by simulating adiabatic bifurcations in nonlinear Hamiltonian systems. *Science Advances*, 2019, vol. 5, eaav2372
- **HAYATO GOTO** ; **KOTARO ENDO** ; **MASARU SUZUKI** ; **YOSHISATO SAKAI** ; **TARO KANAO** ; **YOHEI HAMAKAWA** ; **RYO HIDAKA** ; **MASAYA YAMASAKI** ; **KOSUKE TATSUMURA**. High-performance combinatorial optimization based on classical mechanics. *Science Advances*, 2021, vol. 7, eabe7953